# EUROPEAN PATENT SPECIFICATION

(11) **EP 3 585 095 B1**
(45) Date of publication and mention of the grant of the patent: **16.06.2021**
(21) Application number: 18767115.1
(22) Date of filing: 05.03.2018
(51) Int. Cl.: H04W 28/24, H04L 5/00

(54) **METHOD AND DEVICE FOR CONTROLLING QOS, SMF, UPF, UE, PCF AND AN**
VERFAHREN UND VORRICHTUNG ZUR STEUERUNG VON QOS, SMF, UPF, UE, PCF, UND AN
MÉTHODE ET DISPOSITIF DE CONTRÔLE DE QOS, SMF, UPF, UE, PCF, ET AN

(30) Priority: 17.03.2017 CN 201710160639
(43) Date of publication of application: 25.12.2019
(73) Proprietor: China Academy of Telecommunications Technology, Hai Dian District Beijing 100191 (CN)
(72) Inventor: GUO, Yali, Beijing 100191 (CN)
(74) Representative: dompatent von Kreisler Selting Werner - Partnerschaft von Patent- und Rechtsanwälten mbB
(86) International application number: PCT/CN2018/078018
(87) International publication number: WO 2018/166371

(56) References cited:
- EP-A1- 2 448 354
- WO-A2-2008/136605
- CN-A- 101 072 183
- US-A1- 2009 116 460
- US-A1- 2011 286 334
- ERICSSON: "Cleanup of QoS framework description, S 2-171482", 3GPP SA WG2 Meeting #119, 17 February 2017 (2017-02-17), pages 5. 7. 1-5. 7.3, XP051234411,
- HUAWEI et al.: "QoS control based on 5G QoS Flow", 3GPP SA WG2 Meeting #119 S 2-170973, 17 February 2017 (2017-02-17), XP051217094,
- CATT: "23.501 Aggregate bit rate limitations for non GBR QoS flow,", 3GPP SA WG2 Meeting #119 S2-171006, 17 February 2017 (2017-02-17), XP051217127,

## Description

### CROSS-REFERENCE TO RELATED APPLICATION

### TECHNICAL FIELD

The present disclosure relates to the field of communication technology, in particular to a method and device for controlling QoS, a Session Management Function (SMF), a User Plane Function (UPF), a user equipment (UE), a Policy Control Function (PCF) and an Access Network function (AN).

### BACKGROUND

In a next generation network, one UE can establish multiple session sessions in the core network, and establish a session tunnel in the core network for each session. Data belonging to the session are transmitted between the AN and the core network UPF by the session tunnel. In addition, at the air interface of the AN and the UE, the data belong to the session is transmitted through one or more radio bearers (RBs). In the next generation network, the transmission of non-IP data packets is supported. Such data packets do not have a traditional IP data packet header. Usually, such data packets are unstructured data packets.

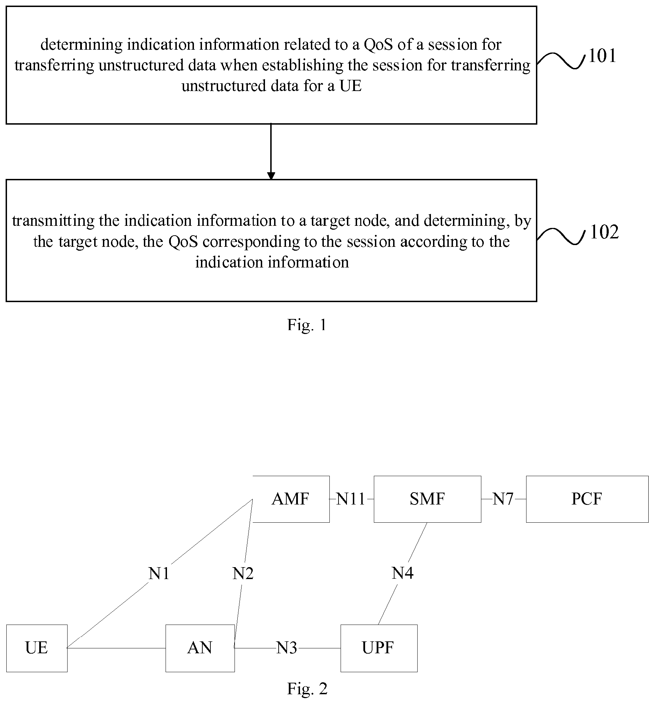

The next generation network architecture is shown in Fig. 2. The UPF is an anchor in the user plane, the Access and Mobility Management Function (AMF), and the Session Management Function (SMF) are network nodes in the control plane. In addition, AMF is responsible for mobility management and is connected to UE and AN. The SMF is responsible for session management and is connected to the UPF. The PCF is responsible for policy control and is connected to the SMF.

US 2011/286334 discloses a wireless communication system to enable quality of service (QOS) parameters to be retrieved to a base station when a wireless device requests service.

For an IP data packet, the SMF can configure a flow template of the IP service flow according to its own configuration or according to the interaction with the PCF. The flow template includes an IP source address, a source port number, an IP target address, a target port number, and a protocol type. The SMF transmits the flow template and the corresponding QoS identifier to the UPF. After receiving the downlink data, the UPF matches the received IP header of the downlink data with the flow template, and tag the matched data packet with the QoS identifier and transmit it to the AN, thereby ensuring that the data packet obtains the corresponding QoS.

In the related technology, a corresponding QoS control is provided to the IP data packet according to the operator policy, and the radio bearer of the corresponding QoS is selected for transmission. However, for an unstructured data packet, since the data packet does not have a traditional IP data packet header, the network cannot parse the data packet header, and thus cannot match and identify such data packets through the flow template, and thus cannot perform QoS control on the unstructured data packet based on the method of controlling the QoS of IP data. In other words, the network cannot perform QoS control on unstructured data packets.

### SUMMARY

The invention is captured in the appended claims.

An object of the present disclosure is to provide a QoS control method and device, a SMF, a UPF, a UE, a PCF and an AN, so as to solve the problem in the related art that the network cannot perform QoS control on unstructured data packets.

In one aspect, the present disclosure provides in some examples a QoS control method applied to a session management function (SMF), comprising: determining indication information related to a QoS of a session for transferring unstructured data when establishing the session for transferring unstructured data for a user equipment (UE); and transmitting the indication information to a target node, and determining, by the target node, the QoS corresponding to the session according to the indication information.

Optionally, the transmitting the indication information to a target node, and determining, by the target node, the QoS corresponding to the session according to the indication information comprises: transmitting the indication information to a user plan function (UPF), and determining, by the UPF, a QoS identifier corresponding to downlink data in the session according to the indication information, and adding, by the UPF, the QoS identifier to a packet header of downlink data in the session; and/or transmitting the indication information to the UE, and determining, by the UE, a QoS identifier corresponding to uplink data in the session according to the indication information.

Optionally, the determining indication information related to a QoS of a session for transferring unstructured data when establishing the session for transferring unstructured data for a UE comprises: assigning a first QoS identifier to the session when establishing the session for transferring unstructured data for the UE; the transmitting the first QoS identifier to the UPF, using, by the UPF, the first QoS identifier as the QoS identifier corresponding to the downlink data in the session, and adding, by the UPF, the first QoS identifier to the packet header of the downlink data packet comprises: transmitting the first QoS identifier to the UPF, using, by the UPF, the first QoS identifier as the QoS identifier corresponding to the downlink data in the session, and adding, by the UPF, the first QoS identifier to the packet header of the downlink data packet; the transmitting the indication information to the UE, and determining, by the UE, a QoS identifier corresponding to uplink data in the session according to the indication information comprises: transmitting the first QoS identifier to the UE, and using, by the UE, the first QoS identifier as a QoS identifier corresponding to the uplink data in the session.

Optionally, the determining indication information related to a QoS of a session for transferring unstructured data when establishing the session for transferring unstructured data for a UE comprises: obtaining session type indication information indicating that the session is used for transferring unstructured data when establishing the session for transferring unstructured data for the UE; the transmitting the indication information to a UPF, and determining, by the UPF, a QoS identifier corresponding to downlink data in the session according to the indication information, and adding, by the UPF, the QoS identifier to a packet header of downlink data in the session comprises: transmitting the session type indication information to the UPF, and obtaining, by the UPF, a second QoS identifier corresponding to the session according to the session type indication information and a pre-configured QoS identifier corresponding to the session type for unstructured data transmission; using the second QoS identifier as the QoS identifier corresponding to the downlink data in the session; and adding, by the UPF, the second QoS identifier to the packet header of the downlink data packet in the session; the transmitting the indication information to the UE, and determining, by the UE, a QoS identifier corresponding to uplink data in the session according to the indication information comprises: transmitting the session type indication information to the UE, obtaining, by the UE, a second QoS identifier corresponding to the session according to the session type indication information and a pre-configured QoS identifier corresponding to a session type for unstructured data transmission, and using the second QoS identifier as a QoS identifier corresponding to the uplink data in the session.

Optionally, the determining indication information related to a QoS of a session for transferring unstructured data when establishing the session for transferring unstructured data for a UE comprises: transmitting a QoS policy request message of the session to a policy control function (PCF) when establishing the session for transferring unstructured data for the UE, the QoS policy request message carrying the session type indication information for indicating that the session is used for transferring unstructured data; obtaining a QoS policy corresponding to the session returned by the PCF according to the QoS policy request message, the QoS policy including a flow filter of a fully-matched wildcard and a third QoS identifier corresponding to the session; the transmitting the indication information to a UPF, and determining, by the UPF, a QoS identifier corresponding to downlink data in the session according to the indication information, and adding, by the UPF, the QoS identifier to a packet header of downlink data in the session comprises: transmitting the QoS policy to the UPF; determining, by the UPF, the QoS identifier corresponding to the downlink data in the session according to the QoS policy; and adding, by the UPF, the QoS identifier to the packet header of the downlink data packet in the session; the transmitting the indication information to the UE, and determining, by the UE, a QoS identifier corresponding to uplink data in the session according to the indication information comprises: transmitting the QoS policy to the UE, and determining, by the UE, a QoS identifier corresponding to the uplink data in the session according to the QoS policy.

Optionally, the transmitting the indication information to a target node, and determining, by the target node, the QoS corresponding to the session according to the indication information comprises: transmitting the indication information to the UPF and an access network function (AN), and transmitting, by the UPF, the downlink data in the session directly to the AN according to the indication information, and determining, by the AN, a QoS corresponding to the downlink data in the session according to the indication information; and/or transmitting the indication information to the UE; and determining, by the UE, the QoS corresponding to the uplink data in the session according to the indication information.

Optionally, the determining indication information related to a QoS of a session for transferring unstructured data when establishing the session for transferring unstructured data for a UE comprises: obtaining the session type indication information indicating that the session is used for transferring unstructured data when establishing the session for transferring unstructured data for the UE; the transmitting the indication information to the UPF and an AN, and transmitting, by the UPF, the downlink data in the session directly to the AN according to the indication information, and determining, by the AN, a QoS corresponding to the downlink data in the session according to the indication information comprises: transmitting the session type indication information to the UPF and the AN, and transmitting, by the UPF, the downlink data in the session directly to the AN according to the session type indication information, and determining, by the AN, a radio bearer having a QoS corresponding to the downlink data in the session according to the session type indication information and a pre-configured radio barrier having a QoS corresponding to the session type used for transferring unstructured data; the transmitting the indication information to the UE; and determining, by the UE, the QoS corresponding to the uplink data in the session according to the indication information comprises: transmitting the session type indication information to the UE, and determining, by the UE, the radio bearer having the QoS corresponding to uplink data in the session according to the session type indication information and a pre-configured radio bearer having the QoS corresponding to the session type used for transferring unstructured data.

Optionally, the QoS identifier comprises at least one of a QoS flow identifier or a QoS identifier.

In a second aspect, a quality of service (QoS) control device applied to a session management function (SMF), comprising: a first determining module, configured to determine indication information related to a QoS of a session for transferring unstructured data when establishing the session for transferring unstructured data for a user equipment (UE); and a first transmitting module, configured to transmit the indication information to a target node, and determine, by the target node, the QoS corresponding to the session according to the indication information.

Optionally, the first transmitting module comprises: a first transmitting sub-module, configured to transmit the indication information to a user plan function (UPF), and determine, by the UPF, a QoS identifier corresponding to downlink data in the session according to the indication information, and add, by the UPF, the QoS identifier to a packet header of downlink data in the session; and/or a second transmitting sub-module, configured to transmit the indication information to the UE, and determine, by the UE, a QoS identifier corresponding to uplink data in the session according to the indication information.

Optionally, the first determining module comprises: an assigning sub-module, configured to assign a first QoS identifier to the session when establishing the session for transferring unstructured data for the UE; the first transmitting sub-module comprises: a first transmitting unit, configured to transmit the first QoS identifier to the UPF, use, by the UPF, the first QoS identifier as the QoS identifier corresponding to the downlink data in the session, and add, by the UPF, the first QoS identifier to the packet header of the downlink data packet; the second transmitting sub-module comprises: a second transmitting unit, configured to transmit the first QoS identifier to the UE, and use, by the UE, the first QoS identifier as a QoS identifier corresponding to the uplink data in the session.

Optionally, the first determining module comprises: a first obtaining sub-module, configured to obtain session type indication information indicating that the session is used for transferring unstructured data when establishing the session for transferring unstructured data for the UE; the first transmitting sub-module comprises: a third transmitting unit, configured to transmit the session type indication information to the UPF, and obtain, by the UPF, a second QoS identifier corresponding to the session according to the session type indication information and a pre-configured QoS identifier corresponding to the session type for unstructured data transmission; use the second QoS identifier as the QoS identifier corresponding to the downlink data in the session; and add, by the UPF, the second QoS identifier to the packet header of the downlink data packet in the session; the second transmitting sub-module comprises: a fourth transmitting unit, configured to transmit the session type indication information to the UE, obtain, by the UE, a second QoS identifier corresponding to the session according to the session type indication information and a pre-configured QoS identifier corresponding to a session type for unstructured data transmission, and use the second QoS identifier as a QoS identifier corresponding to the uplink data in the session.

Optionally, the first determining module comprises: a third transmitting sub-module, configured to transmit a QoS policy request message of the session to a policy control function (PCF) when establishing the session for transferring unstructured data for the UE, the QoS policy request message carrying the session type indication information for indicating that the session is used for transferring unstructured data; a second obtaining sub-module, configured to obtain a QoS policy corresponding to the session returned by the PCF according to the QoS policy request message, the QoS policy including a flow filter of a fully-matched wildcard and a third QoS identifier corresponding to the session; the first transmitting sub-module comprises: a fifth transmitting unit, configured to transmit the QoS policy to the UPF; determine, by the UPF, the QoS identifier corresponding to the downlink data in the session according to the QoS policy; and add, by the UPF, the QoS identifier to the packet header of the downlink data packet in the session; the second transmitting sub-module comprises: a sixth transmitting unit, configured to transmit the QoS policy to the UE, and determine, by the UE, a QoS identifier corresponding to the uplink data in the session according to the QoS policy.

Optionally, the first transmitting module comprises: a fourth transmitting sub-module, configured to transmit the indication information to the UPF and an access network function (AN), and transmit, by the UPF, the downlink data in the session directly to the AN according to the indication information, and determine, by the AN, a QoS corresponding to the downlink data in the session according to the indication information; and/or a fifth transmitting sub-module, configured to transmit the indication information to the UE; and determine, by the UE, the QoS corresponding to the uplink data in the session according to the indication information.

Optionally, the first determining module comprises: a third obtaining sub-module, configured to obtain the session type indication information indicating that the session is used for transferring unstructured data when establishing the session for transferring unstructured data for the UE; the fourth transmitting sub-module comprises: a seventh transmitting unit, configured to transmit the session type indication information to the UPF and the AN, and transmit, by the UPF, the downlink data in the session directly to the AN according to the session type indication information, and determine, by the AN, a radio bearer having a QoS corresponding to the downlink data in the session according to the session type indication information and a pre-configured radio barrier having a QoS corresponding to the session type used for transferring unstructured data; the fifth transmitting sub-module comprises: an eighth transmitting unit, configured to transmit the session type indication information to the UE, and determine, by the UE, the radio bearer having the QoS corresponding to uplink data in the session according to the session type indication information and a pre-configured radio bearer having the QoS corresponding to the session type used for transferring unstructured data.

Optionally, the QoS identifier comprises at least one of a QoS flow identifier or a QoS identifier.

In a third aspect, a session management function (SMF), comprising a first memory, a first processor, and a computer program stored on the first memory and executed by the first processor, wherein the first processor is configured execute the computer program to implement the above quality of service control method.

In a fourth aspect, a computer readable storage medium stored thereon a computer program, wherein a processor executes the computer program to implement the quality of service control method.

In a fifth aspect, a quality of service (QoS) control method applied to a user plane function (UPF), comprising: receiving indication information related to a QoS of a session for transferring unstructured data from a session management function (SMF) when establishing the session for transferring unstructured data for the UE; and determining a QoS corresponding to downlink data in the session according to the indication information.

Optionally, the determining a QoS corresponding to downlink data in the session according to the indication information comprises: determining a QoS identifier corresponding to downlink data in the session according to the indication information, and adding the QoS identifier to a packet header of a downlink data packet in the session.

Optionally, the receiving, by the SMF, indication information related to a QoS of a session for transferring unstructured data when establishing the session for transferring unstructured data for the UE comprises: receiving a first QoS identifier from the SMF, the first QoS identifier being a QoS identifier assigned to the session when the SMF establishes the session for transferring unstructured data for the UE; the determining a QoS identifier corresponding to downlink data in the session according to the indication information, and adding the QoS identifier to a packet header of a downlink data packet in the session comprises: using the first QoS identifier as a QoS identifier corresponding to downlink data in the session, and adding the first QoS identifier to the packet header of the downlink data packet in the session; or the receiving, by the SMF, indication information related to a QoS of a session for transferring unstructured data when establishing the session for transferring unstructured data for the UE comprises: receiving session type indication information from the SMF to indicate that the session is used for transferring unstructured data; the determining a QoS identifier corresponding to downlink data in the session according to the indication information, and adding the QoS identifier to a packet header of a downlink data packet in the session comprises: obtaining a second QoS identifier corresponding to the session according to the session type indication information and the pre-configured QoS identifier corresponding to the session type for the unstructured data transmission; and using the second QoS identifier as a QoS identifier corresponding to downlink data in the session, and adding the second QoS identifier to the packet header of the downlink data packet in the session; or the receiving, by the SMF, indication information related to a QoS of a session for transferring unstructured data when establishing the session for transferring unstructured data for the UE comprises: receiving a QoS policy from the SMF, the QoS policy including a flow filter of a fully-matched wildcard and a third QoS identifier corresponding to the session, wherein when the SMF establishes the session for transferring the unstructured data for the UE, after a QoS policy request message for the session is sent to the PCF entity, the QoS policy is corresponding to the session returned by the PCF according to the QoS policy request message, the QoS policy request message carries session type indication information indicating that the session is used for transferring unstructured data; the determining a QoS identifier corresponding to downlink data in the session according to the indication information, and adding the QoS identifier to a packet header of a downlink data packet in the session comprises: determining a QoS identifier corresponding to the downlink data in the session according to the QoS policy, and adding, by the UPF, the QoS identifier to the packet header of the downlink data packet in the session.

Optionally, the determining a QoS corresponding to downlink data in the session according to the indication information comprises: transmitting the downlink data in the session to the AN according to the indication information, and determining, by the AN, the QoS corresponding to the downlink data in the session according to the indication information sent by the SMF when establishing the session for transferring unstructured data for the UE.

Optionally, the receiving indication information related to a QoS of a session for transferring unstructured data from a session management function (SMF) when establishing the session for transferring unstructured data for the UE comprises: receiving session type indication information indicating that the session is used for transferring unstructured data from the SMF; the transmitting the downlink data in the session to the AN according to the indication information, and determining, by the AN, the QoS corresponding to the downlink data in the session according to the indication information sent by the SMF when establishing the session for transferring unstructured data for the UE comprises: transmitting the downlink data in the session directly to the AN according to the session type indication information, and determining, by the AN, a radio bearer having the QoS corresponding to the downlink data in the session according to the session type indication information that is sent to the AN by the SMF when establishing the session for transferring unstructured data for the UE and a preconfigured radio bearer having the QoS corresponding to the session type for unstructured data transmission.

In a sixth aspect, a quality of service (QoS) control device applied to a user plane function (UPF), includes: a first receiving module, configured to receive indication information related to a QoS of a session for transferring unstructured data from a session management function (SMF) when establishing the session for transferring unstructured data for the UE; and a second determining module, configured to determine a QoS corresponding to downlink data in the session according to the indication information.

Optionally, the second determining module comprises: a first determining sub-module, configured to determine a QoS identifier corresponding to downlink data in the session according to the indication information, and add the QoS identifier to a packet header of a downlink data packet in the session.

Optionally, the first receiving module comprises: a first receiving sub-module, configured to receive a first QoS identifier from the SMF, the first QoS identifier being a QoS identifier assigned to the session when the SMF establishes the session for transferring unstructured data for the UE; the first determining sub-module comprises: a first determining unit configured to use the first QoS identifier as a QoS identifier corresponding to downlink data in the session, and add the first QoS identifier to the packet header of the downlink data packet in the session; or the first receiving module comprises: a second receiving sub-module, configured to receive session type indication information from the SMF to indicate that the session is used for transferring unstructured data; the first determining sub-module comprises: a first obtaining unit, configured to obtain a second QoS identifier corresponding to the session according to the session type indication information and the pre-configured QoS identifier corresponding to the session type for the unstructured data transmission; and a second determining unit, configured to use the second QoS identifier as a QoS identifier corresponding to downlink data in the session, and add the second QoS identifier to the packet header of the downlink data packet in the session; or the first receiving module comprises: a third receiving sub-module, configured to receive a QoS policy from the SMF, the QoS policy including a flow filter of a fully-matchcd wildcard and a third QoS identifier corresponding to the session, wherein when the SMF establishes the session for transferring the unstructured data for the UE, after a QoS policy request message for the session is sent to the PCF entity, the QoS policy is corresponding to the session returned by the PCF according to the QoS policy request message, the QoS policy request message carries session type indication information indicating that the session is used for transferring unstructured data; the first determining sub-module comprises: a third determining unit, configured to determine a QoS identifier corresponding to the downlink data in the session according to the QoS policy, and add, by the UPF, the QoS identifier to the packet header of the downlink data packet in the session.

Optionally, the second determining module comprises: a sixth transmitting sub-module, configured to transmit the downlink data in the session to the AN according to the indication information, and determine, by the AN, the QoS corresponding to the downlink data in the session according to the indication information sent by the SMF when establishing the session for transferring unstructured data for the UE.

Optionally, the first receiving module comprises: a fourth receiving sub-module, configured to receive session type indication information indicating that the session is used for transferring unstructured data from the SMF; the sixth transmitting sub-module comprises: a ninth transmitting unit, configured to transmit the downlink data in the session directly to the AN according to the session type indication information, and determine, by the AN, a radio bearer having the QoS corresponding to the downlink data in the session according to the session type indication information that is sent to the AN by the SMF when establishing the session for transferring unstructured data for the UE and a pre-configured radio bearer having the QoS corresponding to the session type for unstructured data transmission.

In a seventh aspect, a user plane function (UPF), comprising a second memory, a second processor, and a computer program stored on the second memory and executed by the second processor, wherein the second processor is configured execute the computer program to implement the quality of service control method .

In an eighth aspect, a computer readable storage medium stored thereon a computer program, wherein a processor executes the computer program to implement the quality of service control method.

In a ninth aspect, a quality of service (QoS) control method applied to a user equipment (UE), includes: receiving indication information related to a QoS of a session from a session management function (SMF) when establishing a session for transferring unstructured data for the UE; and determining a QoS corresponding to uplink data in the session according to the indication information.

Optionally, the receiving indication information related to a QoS of a session from a SMF when establishing a session for transferring unstructured data for the UE comprises: receiving a first QoS identifier from the SMF, the first QoS identifier being a QoS identifier assigned to a session for transferring unstructured data when establishing the session for transferring unstructured data for the UE; the determining a QoS corresponding to uplink data in the session according to the indication information comprises: using the first QoS identifier as a QoS identifier corresponding to the uplink data in the session; or the receiving indication information related to a QoS of a session from a SMF when establishing a session for transferring unstructured data for the UE comprises: receiving session type indication information from the SMF to indicate that the session is used for transferring unstructured data; the determining a QoS corresponding to uplink data in the session according to the indication information comprises: obtaining the second QoS identifier corresponding to the session according to the session type indication information and the preconfigured QoS identifier corresponding to the session type for the unstructured data transmission; and using the second QoS identifier as a QoS identifier corresponding to the uplink data in the session; or the receiving indication information related to a QoS of a session from a SMF when establishing a session for transferring unstructured data for the UE comprises: receiving a QoS policy from the SMF, the QoS policy including a flow filter of a fully-matched wildcard and a third QoS identifier corresponding to the session, wherein when the SMF establishes the session for transferring the unstructured data for the UE, after a QoS policy request message for the session is sent to the PCF entity, the QoS policy is corresponding to the session returned by the PCF according to the QoS policy request message, the QoS policy request message carries session type indication information indicating that the session is used for transferring unstructured data; the determining a QoS corresponding to uplink data in the session according to the indication information comprises: determining a QoS identifier corresponding to the uplink data in the session according to the QoS policy.

Optionally, the receiving indication information related to a QoS of a session from a SMF when establishing a session for transferring unstructured data for the UE comprises: receiving session type indication information from the SMF to indicate that the session is used for transferring unstructured data; the determining a QoS corresponding to uplink data in the session according to the indication information comprises: determining a radio bearer having a QoS corresponding to the uplink data in the session according to the session type indication information and the preconfigured radio bearer having a QoS corresponding to the session type for the unstructured data transmission.

In a tenth aspect, a quality of service (QoS) control device applied to a user equipment (UE), includes: a second receiving module, configured to receive indication information related to a QoS of a session from a session management function (SMF) when establishing a session for transferring unstructured data for the UE; and a third determining module, configured to determine a QoS corresponding to uplink data in the session according to the indication information.

Optionally, the second receiving module comprises: a fifth receiving sub-module, configured to receive a first QoS identifier from the SMF, the first QoS identifier being a QoS identifier assigned to a session for transferring unstructured data when establishing the session for transferring unstructured data for the UE; the third determining module comprises: a second determining sub-module, configured to use the first QoS identifier as a QoS identifier corresponding to the uplink data in the session; or the second receiving module comprises: a sixth receiving sub-module, configured to receive session type indication information from the SMF to indicate that the session is used for transferring unstructured data; the third determining module comprises: a fourth obtaining sub-module, configured to obtain the second QoS identifier corresponding to the session according to the session type indication information and the pre-configured QoS identifier corresponding to the session type for the unstructured data transmission; and a third determining sub-module, configured to use the second QoS identifier as a QoS identifier corresponding to the uplink data in the session; or the second receiving module comprises: a seventh receiving sub-module, configured to receive a QoS policy from the SMF, the QoS policy including a flow filter of a fully-matched wildcard and a third QoS identifier corresponding to the session, wherein when the SMF establishes the session for transferring the unstructured data for the UE, after a QoS policy request message for the session is sent to the PCF entity, the QoS policy is corresponding to the session returned by the PCF according to the QoS policy request message, the QoS policy request message carries session type indication information indicating that the session is used for transferring unstructured data; the third determining module comprises: a fourth determining sub-module, configured to determine a QoS identifier corresponding to the uplink data in the session according to the QoS policy.

Optionally, the second receiving module comprises: an eighth receiving sub-module, configured to receive session type indication information from the SMF to indicate that the session is used for transferring unstructured data; the third determining module comprises: a fifth determining sub-module, configured to determine a radio bearer having a QoS corresponding to the uplink data in the session according to the session type indication information and the pre-configured radio bearer having a QoS corresponding to the session type for the unstructured data transmission.

An eleventh aspect, a user equipment (UE), includes a third memory, a third processor, and a computer program stored on the third memory and executed by the third processor, wherein the third processor is configured execute the computer program to implement the quality of service control method.

A twelfth aspect, a computer readable storage medium stored thereon a computer program, wherein a processor executes the computer program to implement the quality of service control method.

A thirteenth aspect, a quality of service (QoS) control method applied to a policy control function (PCF), comprises: receiving a QoS policy request message for a session for transferring unstructured data from a session management function (SMF) when establishing the session for transferring unstructured data for the UE, the QoS policy request message carrying session type indication information indicating that the session is used for transferring unstructured data; determining a QoS policy corresponding to the session according to the QoS policy request message, wherein the QoS policy includes a flow filter of a fully-matched wildcard and a third QoS identifier corresponding to the session; and returning the QoS policy corresponding to the session to the SMF.

A fourteenth aspect, a quality of service (QoS) control device applied to a policy control function (PCF), includes: a third receiving module, configured to receive a QoS policy request message for a session for transferring unstructured data from a session management function (SMF) when establishing the session for transferring unstructured data for the UE, the QoS policy request message carrying session type indication information indicating the session is used for transferring unstructured data; a fourth determining module, configured to determine a QoS policy corresponding to the session according to the QoS policy request message, wherein the QoS policy includes a flow filter of a fully-matchcd wildcard and a third QoS identifier corresponding to the session; and a returning module, configured to return the QoS policy corresponding to the session to the SMF.

In a fifteenth aspect, a policy control function (PCF), comprising a fourth memory, a fourth processor, and a computer program stored on the fourth memory and executed by the fourth processor, wherein the fourth processor is configured execute the computer program to implement the quality of service control method.

In a sixteenth aspect, a computer readable storage medium stored thereon a computer program, wherein a processor executes the computer program to implement the quality of service control method.

In a seventeenth aspect, a quality of service (QoS) control method applied to an access network function (AN), comprising: receiving indication information related to the QoS of a session for transferring unstructured data sent to the AN by a session management function (SMF) when establishing the session for transferring unstructured data for the UE; receiving downlink data in the session directly sent by a user plane function (UPF) according to the indication information sent by the SMF to the UPF when establishing the session for transferring unstructured data for the UE; and determining a QoS corresponding to downlink data in the session according to the indication information.

Optionally, the receiving indication information related to the QoS of a session for transferring unstructured data sent to the AN by a session management function (SMF) when establishing the session for transferring unstructured data for the UE comprises: receiving session type indication information that is sent by the SMF to the AN to indicate that the session is used for transferring unstructured data; the determining a QoS corresponding to downlink data in the session according to the indication information comprises: determining a radio bearer having a QoS corresponding to the downlink data in the session according to the session type indication information and a pre-configured radio bearer having a QoS corresponding to the session type for the unstructured data transmission.

In an eighteenth asect, a quality of service (QoS) control device applied to an access network function (AN), comprising: a fourth receiving module, configured to receive indication information related to the QoS of a session for transferring unstructured data sent to the AN by a session management function (SMF) when establishing the session for transferring unstructured data for the UE; a fifth receiving module, configured to receive downlink data in the session directly sent by a user plane function (UPF) according to the indication information sent by the SMF to the UPF when establishing the session for transferring unstructured data for the UE; and a fifth determining module, configured to determine a QoS corresponding to downlink data in the session according to the indication information.

Optionally, the fourth receiving module comprises: a ninth receiving sub-module, configured to receive session type indication information that is sent by the SMF to the AN to indicate that the session is used for transferring unstructured data; the fifth determining module comprises: a sixth determining sub-module, configured to determine a radio bearer having a QoS corresponding to the downlink data in the session according to the session type indication information and a pre-configured radio bearer having a QoS corresponding to the session type for the unstructured data transmission.

In a nineteenth aspect, an access network function (AN), comprising a fifth memory, a fifth processor, and a computer program stored on the fifth memory and executed by the fifth processor, wherein the fifth processor is configured execute the computer program to implement the quality of service control method.

In a twentieth aspect, a computer readable storage medium stored thereon a computer program, wherein a processor executes the computer program to implement the quality of service control method.

The technical solutions in the present disclose have the following advantages.

In the QoS control method, the SMF determines indication information related to a QoS of a session for transferring unstructured data when establishing the session for transferring unstructured data for a UE, and transmits the indication information to the target node, and the target node can determine the QoS corresponding to the session according to the indication information, the target node can determine the QoS of the session for the unstructured data transmission according to the indication information sent by the SMF, thereby implementing the QoS control of the unstructured data packet by the network, ensuring the QoS for unstructured data transmission and improving network performance. The technical problem in the related art that the network cannot perform the QoS control on unstructured data packets is solved.

### BRIEF DESCRIPTION OF THE DRAWINGS

In order to illustrate the technical solutions of the present disclosure or the related art in a clearer manner, the drawings desired for the present disclosure or the related art will be described hereinafter briefly. Obviously, the following drawings merely relate to some embodiments of the present disclosure, and based on these drawings, a person skilled in the art may obtain the other drawings without any creative effort.
Fig.1 is a flowchart of a QoS control method applied to an SMF according to an embodiment of the present disclosure;
Fig. 2 is a schematic diagram of a next generation network architecture;
Fig. 3 is a flow chart of a QoS control method applied to unstructured data transmission in accordance with an embodiment of the present disclosure;
Fig. 4 is another flow diagram of a QoS control method applied to unstructured data transmission in accordance with an embodiment of the present disclosure;
Fig. 5 is still another flowchart of applying a Qos control method applied to unstructured data transmission according to an embodiment of the present disclosure;
Fig. 6 is a schematic structural diagram of a QoS control device applied to an SMF according to an embodiment of the present disclosure;
Fig. 7 is a schematic structural diagram of an SMF according to an embodiment of the present disclosure;
Fig. 8 is a flowchart of a QoS control method applied to a UPF according to an embodiment of the present disclosure;
Fig. 9 is a schematic structural diagram of a QoS control device applied to an UPF according to an embodiment of the present disclosure;
Fig. 10 is a schematic structural diagram of a UPF according to an embodiment of the present disclosure;
Fig. 11 is a flowchart of a QoS control method applied to a UE according to an embodiment of the present disclosure;
Fig. 12 is a schematic structural diagram of a QoS control device applied to a UE according to an embodiment of the present disclosure;
Fig. 13 is a schematic structural diagram of a UE according to an embodiment of the present disclosure;
Fig. 14 is a flowchart of a QoS control method applied to a PCF according to an embodiment of the present disclosure;
Fig. 15 is a schematic structural diagram of a QoS control device applied to a PCF according to an embodiment of the present disclosure;
Fig. 16 is a schematic structural diagram of a PCF according to an embodiment of the present disclosure;
Fig. 17 is a flowchart of a QoS control method applied to an AN according to an embodiment of the present disclosure;
Fig. 18 is a schematic structural diagram of a QoS control device to an AN according to an embodiment of the present disclosure;
Fig. 19 is a schematic structural diagram of an AN according to an embodiment of the present disclosure.

### DETAILED DESCRIPTION OF THE EMBODIMENTS

The technical problems, the technical solutions, and the advantages of the present disclosure will be more clearly described in conjunction with the accompanying drawings and specific embodiments.

In some embodiments of the present disclosure, as shown in Fig. 1, a QoS control method applied to a SMF includes the following steps.

Step 101: determining indication information related to a QoS of a session for transferring unstructured data when establishing the session for transferring unstructured data for a UE.

Here, when establishing a session for transferring unstructured data for the UE, the indication information related to the QoS of the session is determined so as to provide support for determining the QoS corresponding to the session.

It should be noted that, the embodiment of the present disclosure implements the QoS control of the session for transferring unstructured data during data transmission. Unless otherwise specified, the sessions mentioned below refer to the session for transferring unstructured data.

Step 102: transmitting the indication information to a target node, and determining, by the target node, the QoS corresponding to the session according to the indication information.

Here, the SMF transmits the indication information related to the QoS of the session to the target node, and the target node can determine the QoS corresponding to the session according to the indication information, thereby implementing the QoS control on the unstructured data packet, and improving the network performance.

In the QoS control method of the embodiment of the present disclosure, the target node can determine the QoS of the session for transferring the unstructured data according to the indication information sent by the SMF, thereby implementing the QoS control of the unstructured data packet by the network, ensuring the QoS for unstructured data transmission and improving network performance. The technical problem in the related art that the network cannot perform the QoS control on unstructured data packets is solved.

Optionally, the foregoing step 102 includes step 1021: transmitting the indication information to the UPF entity, and determining, by the UPF, a QoS identifier corresponding to downlink data in the session according to the indication information, and adding, by the UPF, the QoS identifier to a packet header of downlink data in the session.

Here, the SMF transmits the indication information to the UPF, and the UPF can determine the QoS identifier corresponding to the downlink data in the session according to the indication information, and add a QoS identifier to the packet header of the downlink data packet in the session, thereby implementing the QoS control to the unstructured data packets by the network. The UPF adds the QoS identifier to the packet header of the downlink data packet in the session, and the UPF subsequently transmits the downlink data to the AN, and the AN can select a radio bearer having a corresponding QoS to transmit the downlink data according to the QoS identifier of the data packet header, thus ensuring the QoS of the data.

Optionally, the foregoing step 102 includes step 1022: transmitting the indication information to the UE, and determining, by the UE, a QoS identifier corresponding to uplink data in the session according to the indication information.

Here, the SMF transmits the indication information to the UE, and the UE can determine the QoS identifier corresponding to the uplink data in the session according to the indication information, thereby implementing the QoS control on the unstructured data packet by the network. The UE can subsequently select a radio bearer having corresponding QoS according to the QoS identifier to transmit the uplink data, thereby ensuring the QoS of the data.

Here, the above step 102 may only include step 1021 or step 1022, or include both step 1021 and step 1022. Those skilled in the art can understand that it is not limited herein.

As an optional implementation, the foregoing step 101 includes step 1011: when establishing the session for transferring unstructured data for the UE, assigning a corresponding first QoS identifier to the session.

Here, the SMF may assign a corresponding first QoS identifier to the session when the session for transferring the unstructured data is established for the UE, and the target node may subsequently directly determine the QoS of the session according to the first QoS identifier.

The SMF may assign the first QoS identifier to the session for transferring unstructured data according to an operator policy or user subscription information.

The above step 1021 includes step 10211: transmitting the first QoS identifier to the UPF, using, by the UPF, the first QoS identifier as the QoS identifier corresponding to the downlink data in the session, and adding, by the UPF, the first QoS identifier to the packet header of the downlink data packet.

Here, the SMF transmits the first QoS identifier to the UPF, and the UPF can directly use the first QoS identifier as the QoS identifier corresponding to the downlink data of the session, and add the first QoS identifier to the packet header of the downlink data packet in the session, thereby implementing the QoS control on unstructured data packets by the network. The UPF adds the first QoS identifier to the packet header of the downlink data packet in the session, the UPF subsequently transmits the downlink data to the AN, and the AN can select the radio bearer having a corresponding QoS according to the first QoS identifier in the data packet header to transmit the downlink data, thereby ensuring the QoS of the data transmission.

The first QoS identifier assigned by the SMF for the session for transferring unstructured data belongs to a QoS identifier in a session level, and the UPF tags the data packet header of any downlink data in the session with the first QoS identifier.

The above step 1022 includes step 10221: transmitting the first QoS identifier to the UE, and using, by the UE, the first QoS identifier as a QoS identifier corresponding to the uplink data in the session.

Here, the SMF transmits the first QoS identifier to the UE, and the UE can directly use the first QoS identifier as the QoS identifier corresponding to the uplink data in the session, thereby implementing the QoS control of the unstructured data packet by the network. The UE can subsequently select the radio bearer having the corresponding QoS according to the first QoS identifier to transmit the uplink data, thereby ensuring the QoS of the data transmission.

As mentioned above, the first QoS identifier assigned by the SMF for the session for transferring unstructured data belongs to the QoS identifier in a session level, and the UE selects the radio bear having a corresponding QoS according to the first QoS identifier to transmit any uplink data in the session.

At this time, the SMF provides a first QoS identifier for the QoS control of the session to the UPF when the session for transferring unstructured data is established, and the UPF receives any downlink data of the session, and tag the packet header of the data with the first QoS identifier, and the data is transmitted to the AN through the session tunnel. The AN can select the radio bearer that provides the corresponding QoS according to the QoS identifier in the packet header, thereby ensuring the QoS of the data transmission. The SMF may also transmit the first QoS identifier to the UE when the session is established, and the UE may select a radio bearer of the corresponding QoS according to the first QoS identifier to transmit any uplink data in the session, thus ensuring the QoS of the data transmission.

As another optional implementation, the foregoing step 101 includes step 1012, when establishing a session for transferring unstructured data for the UE, obtaining session type indication information indicating that the session is used for transferring unstructured data.

Here, when establishing a session for transferring unstructured data for the UE, the SMF may obtain session type indication information indicating that the session is used for transferring unstructured data, and the target node may subsequently determine the QoS of the session according to the session type indication information.

The above step 1021 includes step 10212: transmitting the session type indication information to the UPF, and obtaining, by the UPF, a second QoS identifier corresponding to the session according to the session type indication information and a pre-configured QoS identifier corresponding to the session type for unstructured data transmission; using the second QoS identifier as the QoS identifier corresponding to the downlink data in the session; and adding, by the UPF, the second QoS identifier to the packet header of the downlink data packet in the session.

Here, the SMF transmits session type indication information indicating that the session is used for transferring unstructured data to the UPF. A default QoS identifier for the session type, that is, the second QoS identifier, is pre-configured on the UPF. The UPF obtains the second QoS identifier corresponding to the session when the session is used for transferring the unstructured data according to the session type indication information, and then the second QoS identifier is used as the QoS identifier corresponding to the downlink data in the session, and the second QoS identifier is added to the packet header of downlink data packet in the session, thereby implementing the QoS control of the unstructured data packet by the network.

The UPF adds the second QoS identifier to the packet header of the downlink data packet of the session, and the UPF subsequently transmits the downlink data to the AN, and the AN can select the radio bearer having a corresponding QoS according to the second QoS identifier of the data packet header to transmit the downlink data, thereby ensuring the QoS of the data transmission.

The QoS identifier corresponding to the session type for unstructured data transmission and preconfigured on the UPF, that is, the second QoS identifier, also belongs to a QoS identifier in a session level, and the UPF tags the packet header of any downlink data in the session with the second QoS identifier.

The above step 1022 includes step 10222: transmitting the session type indication information to the UE; obtaining, by the UE, a second QoS identifier corresponding to the session according to the session type indication information and a pre-configured QoS identifier corresponding to a session type for unstructured data transmission; and using the second QoS identifier as a QoS identifier corresponding to the uplink data in the session.

Here, the SMF transmits session type indication information indicating that the session is used for transferring unstructured data to the UE. A default QoS identifier for the session type, that is, the second QoS identifier, is pre-configured on the UE. The UE determines, according to the session type indication information, that the session is used for transferring the unstructured data, obtains the second QoS identifier corresponding to the session, and then uses the second QoS identifier as the QoS identifier corresponding to the uplink data in the session, thereby implementing the QoS control for structured data packets by the network. The UE can subsequently select the radio bearer having the corresponding QoS according to the second QoS identifier to transmit the uplink data, thereby ensuring the QoS of the data transmission.

The QoS identifier corresponding to the session type for unstructured data transmission and pre-configured on the UE is theoretically the same as the QoS identifier corresponding to the session type for unstructured data transmission and preconfigured on the UPF, and both are the second QoS identifier. As mentioned above, the second QoS identifier also belongs to the QoS identifier in the session level, and the UE selects the radio bearer having the corresponding QoS according to the second QoS identifier to transmit any uplink data in the session.

At this time, the SMF transmits the session type to the UPF when the session for transferring unstructured data is established, and a default second QoS identifier for the session type is pre-configured on the UPF, and the UPF receives any downlink data of the session and tags the packet header with the second QoS identifier and transmit the downlink data to the AN through the session tunnel. The AN can select the radio bearer having a corresponding QoS according to the QoS identifier of the packet header to transmit data, thereby ensuring the QoS of the data transmission. The SMF may also transmit the session type to the UE when the session is established, and the default second QoS identifier for the session type is pre-configured on the UE, and the UE selects the radio bearers having the corresponding QoS according to the second QoS identifier to transmit any uplink data in the session, thereby ensuring the QoS of the data transmission.

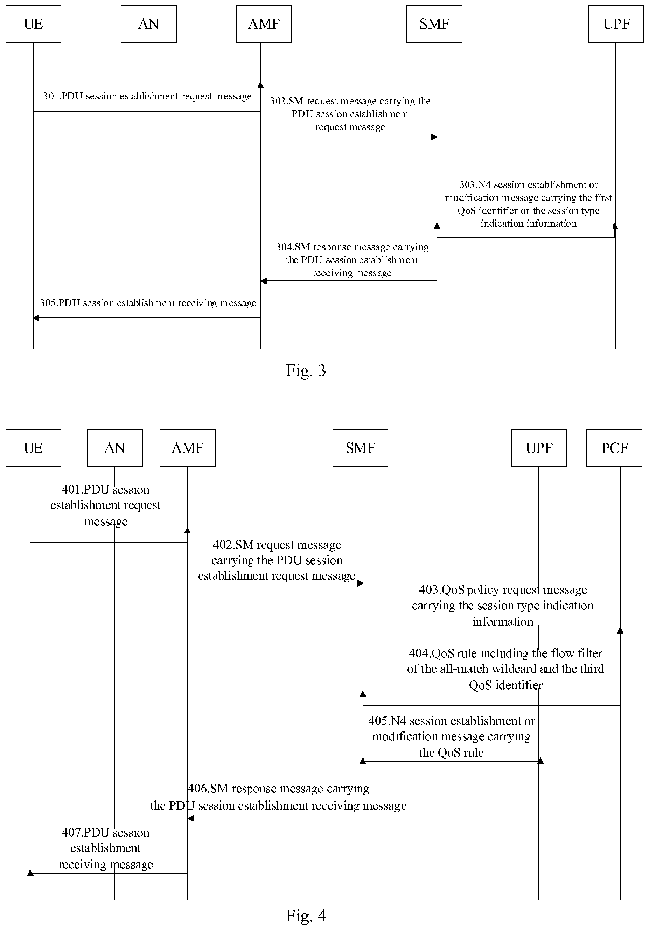

A specific implementation for performing unstructured data transmission by applying the QoS control method of the embodiment of the present disclosure is as follows. Referring to Fig. 3, the method includes the following steps.

Step 301: transmitting, by a UE, a packet data unit (PDU) session establishment request message to an AMF entity.

Here, the UE transmits a PDU session establishment request message to the AMF, and requests to establish a PDU session for transferring unstructured data. The PDU session establishment request message is a Non-Access Stratum (NAS) message between the UE and the AMF, and is transparently transmitted by the AN.

Step 302: transmitting, by the AMF, an Session Management (SM) request message carrying the PDU session establishment request message to the SMF.

Here, the AMF selects an SMF for the UE, and transmits an SM request message carrying the PDU session establishment request message to the selected SMF.

Step 303: transmitting, by the SMF, an N4 session establishment or modification message carrying the first QoS identifier or the session type indication information to the UPF.

Here, when the SMF determines that a session for transferring unstructured data is established of the UE, the session may be assigned a first QoS identifier for the QoS control of the session, and the SMF transmits the first QoS identifier to the UPF through the N4 session establishment or modification message. Alternatively, the SMF may transmit the session type indication information indicating that the session is used for transferring unstructured data to the UPF, and the default second QoS identifier for the session type is pre-configured on the UPF. The first QoS identifier and the second QoS identifier are, for example, QoS Flow Id(QFI) or QoS Class Id5QI.

Step S304: transmitting, by the SMF, an SM response message carrying the PDU session establishment receiving message to the AMF, and the PDU session establishment receiving message includes the first QoS identifier or the session type indication information.

Here, the SMF transmits a PDU session establishment receiving message in the SM response message to the AMF, and the PDU session establishment receiving message includes a first QoS identifier for the QoS control of the session. Optionally, the PDU session establishment receiving message includes session type indication information indicating that the session is used for transferring unstructured data, and the defaulted second QoS identifier for the session type is pre-configured on the UE.

In step 305, transmitting by the AMF, the PDU session establishment receiving message to the UE.

After the PDU session is successfully established through the above steps, both the UPF and the UE obtain the QoS identifier for the QoS control of the session, thereby implementing the QoS control for the unstructured data transmission. After the downlink data in the session reaches the UPF, the UPF tags the QoS identifier on the packet header and transmits it to the AN through the session tunnel. The AN selects the radio bearer having the corresponding QoS according to the QoS identifier of the packet header to transmit the data, thereby ensuring the QoS of the data transmission. For the uplink data, the UE selects the radio bearer having the corresponding QoS according to the QoS identifier to transmit the uplink data, thereby ensuring the QoS of the data transmission.

As another optional implementation, the foregoing step 101 includes step 1013: when establishing a session for transferring unstructured data for the UE, transmitting a QoS policy request message of the session to the PCF entity, the QoS policy request message carrying the session type indication information for indicating that the session is used for transferring unstructured data.

Here, when establishing a session for transferring unstructured data for the UE, the SMF may request a QoS policy rule from the PCF, and transmit the QoS policy request carrying the session type indication information indicating the session for transferring unstructured data to the PCF.

Step 1014: obtaining a QoS policy corresponding to the session returned by the PCF according to the QoS policy request message, where the QoS policy includes a flow filter of a fully-matched wildcard and a third QoS identifier corresponding to the session.

Here, the PCF establishes a QoS policy rule for the session for transferring the unstructured data, including a flow filter of the fully-matched wildcard and a third QoS identifier corresponding to the session. The target node may subsequently determine the QoS of the session according to the QoS rule.

The above step 1021 includes step 10213: transmitting the QoS policy to the UPF; determining, by the UPF, the QoS identifier corresponding to the downlink data of the session according to the QoS policy; and adding, by the UPF, the QoS identifier to the packet header of the downlink data packet in the session.

Here, the SMF transmits the QoS rule to the UPF, and the UPF can determine the QoS identifier corresponding to the downlink data in the session according to the QoS rule, and add the QoS identifier to the packet header of the downlink data packet in the session, thereby implementing the QoS control of the unstructured data packet by the network. Since the flow filter of the QoS rule is a fully matched wildcard, the UPF can determine that the QoS identifier corresponding to all downlink data in the session is the third QoS identifier, and the third QoS identifier is added to the packet header of all downlink data packets in the session. The UPF adds the third QoS identifier to the packet header of the downlink data packet in the session, and the UPF subsequently transmits the downlink data to the AN, and the AN can select the radio bearer having the corresponding QoS according to the third QoS identifier of the data packet header to transmit the downlink data, thereby ensuring the QoS of the data transmission.

The above step 1022 includes step 10223: transmitting the QoS policy to the UE; and determining, by the UE, a QoS identifier corresponding to the uplink data in the session according to the QoS policy.

Here, the SMF transmits the QoS rule to the UE, and the UE can determine the QoS identifier corresponding to the uplink data in the session according to the QoS rule, thereby implementing the QoS control of the unstructured data packet by the network. Since the flow filter of the QoS rule is a fully matched wildcard, the UE may determine that QoS identifier corresponding to all uplink data in the session is a third QoS identifier. The UE can subsequently select the radio bearer having the corresponding QoS according to the third QoS identifier to transmit the uplink data, thereby ensuring the QoS of the data transmission.

At this time, when establishing the session, the SMF transmits the session type to the PCF to request the QoS policy. For the session for transmitting the unstructured data, the PCF configures a QoS rule, including the flow filter of the fully matched wildcard and the third QoS identifier. The PCF transmits the QoS rule to the SMF. The SMF further transmits the QoS rule to the UPF and the UE, and the UPF receives any downlink data of the session, and performs matching according to the QoS rule. Since the flow filter of the QoS rule is a fully matched wildcard, the UPF receives any downlink data in the session, and tags the packet header with the third QoS identifier indicated by the QoS rule, and transmits the downlink data to the AN through the session tunnel. The AN select the radio bearer having the corresponding QoS according to the QoS identifier of the packet header to transmit data, thereby ensuring the QoS of the data transmission. For the uplink data, the UE matches the uplink data according to the QoS rule. Since the flow filter of the QoS rule is a fully matched wildcard, the UE selects the radio bearer having the QoS according to the third QoS identifier indicated by the QoS rule to transmit all uplink data in the session.

Another specific implementation for applying the QoS control method to unstructured data transmission of the embodiment of the present disclosure is exemplified as follows. Referring to Fig. 4, the method includes the following steps.

Step 401: transmitting, by the UE, a PDU session establishment request message to the AMF.

Here, the UE transmits the PDU session establishment request message to the AMF, requests to establish a PDU session for transferring unstructured data. The PDU session establishment request message is an NAS message between the UE and the AMF, and is transparently transmitted through the AN.

Step 402: transmitting, by the AMF, an SM request message carrying the PDU session establishment request message to the SMF.

Here, the AMF selects an SMF for the UE, and transmits an SM request message carrying the PDU session establishment request message to the selected SMF.

Step 403: transmitting, by the SMF, a QoS policy request message carrying the session type indication information to the PCF.

Here, when the SMF determines that the UE establishes a session for transferring unstructured data, the SMF requests a QoS policy from the PCF, and transmit the QoS policy request message carrying the session type indication information indicating the session for transferring the unstructured data to the PCF.

Step 404: returning, by the PCF, a QoS rule including the flow filter of the all-match wildcard and the third QoS identifier to the SMF.

Here, the PCF determines a QoS rule for the session, including a flow filter of the fully matched wildcard and a third QoS identifier, and the third QoS identifier is, for example, a QoS flow identifier QFI or a QoS identifier 5QI, etc., and the PCF transmits the QoS rule to the SMF.

Step 405: transmitting, by the SMF, an N4 session establishment or modification message carrying the QoS rule to the UPF.

Here, the SMF transmits the QoS rule to the UPF through the N4 session establishment or modification message. The UPF subsequently receives any downlink data in the session, and performs matching according to the QoS rule, because the flow filter of the QoS rule is a fully matched wildcard. Therefore, the UPF tags the packet header of all downlink packets in the session with the third QoS identifier indicated by the QoS rule.

Step 406: transmitting, by the SMF, an SM response message carrying the PDU session establishment receiving message including the QoS rule to the AMF.

Here, the SMF transmits a PDU session establishment receiving message to the AMF in the SM response message, and the PDU session establishment receiving message includes the QoS rule.

Step 407; transmitting, by the AMF, the PDU session establishment receiving message to the UE.

Here, the AMF transmits a PDU session establishment receiving message including the QoS rule to the UE, and when the UE transmits any uplink data in the session, the UE matches according to the QoS rule. Since the flow filter of the QoS rule is a fully matched wildcard, the UE selects the radio bearer having a corresponding QoS according to the third QoS identifier indicated by the QoS rule to transmit all uplink data.

After the PDU session is successfully established through the above steps, both the UPF and the UE obtain the QoS rule for the QoS control of the session, and can determine the QoS identifier for the session according to the QoS rule, thereby implementing the QoS control of unstructured data. After the downlink data in the session reaches the UPF, the UPF tags the QoS identifier indicated by the QoS rule in the packet header according to the QoS rule, and transmits the QoS identifier indicated by the QoS rule to the AN through the session tunnel, and the AN selects the radio bearer having the corresponding QoS according to the QoS identifier of the packet header to transmit data, thereby ensuring the QoS of the data transmission. For the uplink data, the UE selects the radio bearer having the corresponding QoS according to the QoS identifier indicated by the QoS rule to transmit the uplink data, thereby ensuring the QoS of the data transmission.

Optionally, the QoS identifier is a QoS flow identifier QFI or a QoS identifier 5QI.

Optionally, the foregoing step 102 includes step 1023: transmitting the indication information to the UPF and the AN function entity, and transmitting, by the UPF, the downlink data in the session directly to the AN according to the indication information, and determining, by the AN, a QoS corresponding to the downlink data in the session according to the indication information.

Here, the SMF transmits the indication information to the UPF and the AN, and the UPF can directly transmit the downlink data in the session to the AN according to the indication information, and the UPF does not need to tag the QoS identifier in the data packet header, and determines the QoS corresponding to the downlink data in the session through the AN, thereby implementing the QoS control of the unstructured data packets by the network.

Optionally, the foregoing step 102 includes step 1024: transmitting the indication information to the UE; and determining, by the UE, the QoS corresponding to the uplink data in the session according to the indication information.

Here, the SMF transmits the indication information to the UE, and the UE can determine the QoS corresponding to the uplink data in the session according to the indication information, thereby implementing the QoS control of the unstructured data packet by the network.

Here, the above step 102 may only include step 1023 or step 1024, or include both step 1023 and step 1024. Those skilled in the art can understand that it is not limited herein.

As an optional implementation, the step 101 includes step 1015: when establishing a session for transferring unstructured data for the UE, obtaining session type indication information indicating that the session is used for transferring unstructured data.

Here, when establishing a session for transferring unstructured data for the UE, the SMF may obtain session type indication information indicating that the session is used for transferring unstructured data, and the target node may subsequently determine the QoS of the session according to the session type indication information.

The above step 1023 includes step 10231: transmitting the session type indication information to the UPF and the AN, and transmitting, by the UPF, the downlink data in the session directly to the AN according to the session type indication information, and determining, by the AN, the radio bearer having the QoS corresponding to the downlink data in the session according to the session type indication information and the pre-configured radio barrier having the QoS corresponding to the session type used for transferring unstructured data.

Here, the SMF transmits session type indication information indicating that the session is used for transferring unstructured data to the UPF and AN. The UPF transmits the downlink data in the session to the AN directly when UPF determines that the session is used for transferring the unstructured data according to the session type indication information, and the UPF does not need to tag the QoS in the data packet header. The radio bearer having the QoS corresponding to the session type used for transferring the unstructured data is pre-configured on the AN. When the AN receives the downlink data sent by the UPF and determines that the session is used for transferring the unstructured data, and the radio barrier having the QoS corresponding to session is used to transmit the downlink data, thereby realizing the QoS control of the unstructured data packet by the network and ensuring the QoS of the data transmission.

The above step 1024 includes step 1041: transmitting the session type indication information to the UE, and determining, by the UE, the radio bearer having the QoS corresponding to uplink data in the session according to the session type indication information and a pre-configured radio bearer having the QoS corresponding to the session type used for transferring unstructured data.

Here, the SMF transmits session type indication information indicating that the session is used for transferring unstructured data to the UE. The radio bearer having the QoS corresponding to the session type used for transferring unstructured data is pre-configured on the UE. When the UE determines that the session is used for transferring unstructured data according to the session type indication information, the radio bearer having the QoS corresponding to the session is used to transmit the uplink data, thereby implementing the QoS control of the unstructured data packet by the network, and ensuring the QoS of the data transmission.

At this time, the SMF transmits the session type to the UPF when the session used for transferring unstructured data is established, and also transmits the session type to the AN. The radio bearer having a default QoS corresponding to this session type is pre-configured on the AN. The UPF receives any downlink data in the session, does not need to tag a QoS identifier in the packet header, and directly transmits the received data packet to the AN through the session tunnel. The AN transmits the received data packet directly to the UE through the radio bearer having the default QoS, thus ensuring the QoS of the data transmission. The SMF can also transmit the session type to the UE when the session is established. The radio bearer having the default QoS corresponding to the session type is pre-configured on the UE. For the uplink data, the UE uniformly uses the radio bearer having the default QoS corresponding to the session to transmit data, thereby ensuring the QoS of the data transmission.

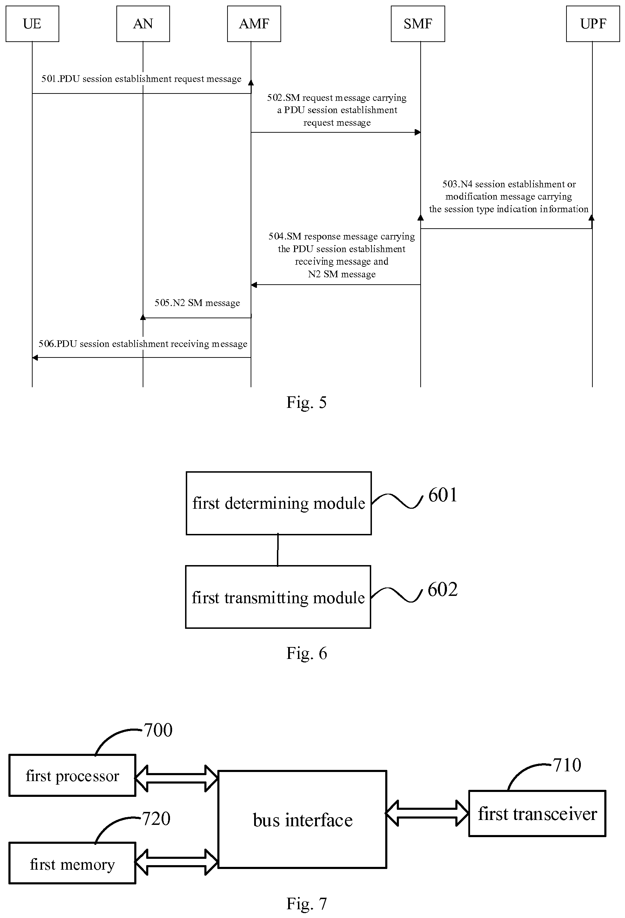

Another specific implementation flow of the QoS control method applied to unstructured data transmission of the embodiment of the present disclosure is exemplified as follows. Referring to Fig. 5, the method includes step 501: transmitting by the UE, a PDU session establishment request message to the AMF entity.

Here, the UE transmits a PDU session establishment request message to the AMF entity, requests to establish a PDU session for transferring unstructured data. The PDU session establishment request message is a NAS message between the UE and the AMF, and is transparently transmitted by the AN.

Step 502: transmitting, by the AMF, an SM request message carrying a PDU session establishment request message to the SMF.

Here, the AMF selects an SMF for the UE, and transmits an SM request message carrying the PDU session establishment request message to the selected SMF.

Step 503: transmitting, by the SMF, an N4 session establishment or modification message carrying the session type indication information to the UPF.

Here, when the SMF determines that the UE establishes a session for transferring unstructured data, the SMF transmits the session type indication information indicating that the session is used for transferring the unstructured data to the UPF through the N4 session establishment or modification message.

Step 504: transmitting, by the SMF, an SM response message carrying the PDU session establishment receiving message and an N2 SM message to the AMF. The PDU session establishment receiving message and the N2 SM message include the session type indication information.

Here, the SMF transmits a PDU session establishment receiving message in the SM response message to the AMF, the PDU session establishment receiving message includes the session type indication information, and the SM response message includes an N2 SM message sent to the AN, and the N2 SM message includes the session type indication information.

In step 505, transmitting, by the AMF, an N2 SM message to the AN.

In step 506, transmitting, by the AMF, a PDU session establishment receiving message to the UE.

After the PDU session is successfully established through the above steps, the UPF, AN, and UE obtain the type of the session, and determine that the session is used for transferring unstructured data. After the downlink data of the session reaches the UPF, the UPF directly transmits the received data packet to the AN through the session tunnel, and does not need to tag the data packet header with the QoS identifier, and the AN transmits the received data packet directly to the UE by the default radio bearer. The QoS provided for the UE is the QoS provided by the default radio bearer of the session. For uplink data, the UE uniformly uses the default radio bearer for the session to transmit data, thereby implementing the QoS control of the unstructured data packet by the network, and ensuring the QoS of the data transmission.

In the QoS control method of the embodiment of the present disclosure, the target node can determine the QoS of the session for transferring the unstructured data according to the indication information sent by the SMF, thereby implementing the QoS control of the unstructured data packet by the network, and ensuring the QoS for transferring unstructured data, and improving the network performance. The technical problem that the network cannot perform QoS control on unstructured data packets in the related art is solved.

In some embodiments of the present disclosure, as shown in Fig. 6, a QoS control device applied to the SMF includes: a first determining module 601, configured to determine indication information related to a QoS of a session when the session for transferring the unstructured data is established the UE; and a first transmitting module 602, configured to transmit the indication information to a target node, and determine, by the target node, the QoS corresponding to the session according to the indication information.

In the QoS control device of the embodiment of the present disclosure, the target node can determine the QoS of the session for transferring unstructured data according to the indication information sent by the SMF, thereby implementing the QoS control of the unstructured data packet by the network, ensuring the QoS for unstructured data transmission and improving network performance. The technical problem in the related art that the network cannot perform the QoS control on unstructured data packets is solved.

Optionally, the first transmitting module 602 includes: a first transmitting sub-module, configured to transmit the indication information to the UPF entity, and determine, by the UPF, a QoS identifier corresponding to the downlink data in the session according to the indication information, and add, by the UPF, the QoS identifier to the packet header of downlink data in the session; and/or a second transmitting sub-module, configured to transmit the indication information to the UE so that the UE determines a QoS identifier corresponding to uplink data in the session according to the indication information.

Optionally, the first determining module 601 includes: an assignment sub-module, configured to assign a corresponding first QoS identifier to the session when establishing a session for transferring unstructured data for the UE. The first transmitting sub-module includes: a first transmitting unit, configured to transmit the first QoS identifier to the UPF, where the UPF uses the first QoS identifier as the QoS identifier corresponding to the downlink data in the session, and the UPF adds the first QoS identifier to the packet header of the downlink data packet. The second transmitting sub-module includes: a second transmitting unit, configured to transmit the first QoS identifier to the UE, and the UE uses the first QoS identifier as a QoS identifier corresponding to the uplink data in the session.

Optionally, the first determining module 601 includes: a first obtaining sub-module, configured to obain session type indication information indicating that the session is used for transferring unstructured data when establishing a session for transferring unstructured data for the UE. The first transmitting sub-module includes: a third transmitting unit, configured to transmit the session type indication information to the UPF, where the UPF obtains a second QoS identifier corresponding to the session according to the session type indication information and a pre-configured QoS identifier corresponding to the session type for unstructured data transmission; uses the second QoS identifier as the QoS identifier corresponding to the downlink data in the session; and adds the second QoS identifier to the packet header of the downlink data packet in the session. The second transmitting sub-module includes: a fourth transmitting unit, configured to transmit the session type indication information to the UE, where the UE obtains a second QoS identifier corresponding to the session according to the session type indication information and a pre-configured QoS identifier corresponding to a session type for unstructured data transmission; and uses the second QoS identifier as a QoS identifier corresponding to the uplink data in the session.

Optionally, the first determining module 601 includes: a third transmitting sub-module, configured to transmit a QoS policy request message for the session to the PCF when establishing a session for transferring unstructured data for the UE, where the QoS policy request message carries session type indication information indicating that the session is used for transferring unstructured data; and a second obtaining sub-module, configured to obtain a QoS policy corresponding to the session returned by the PCF according to the QoS policy request message, where the QoS policy includes a flow filter of a fully-matched wildcard and a third QoS indicator corresponding to the session. The first transmitting sub-module includes: a fifth transmitting unit, configured to transmit the QoS policy to the UPF, where the UPF determines a QoS identifier corresponding to the downlink data in the session according to the QoS policy, and adding the QoS identifier to the packet header of the downlink data packet. The second transmitting sub-module includes: a sixth transmitting unit, configured to transmit the QoS policy to the UE, and determine, by the UE, a QoS identifier corresponding to the uplink data in the session according to the QoS policy.

Optionally, the first transmitting module 602 includes: a fourth transmitting sub-module, configured to transmit the indication information to the UPF and the AN function entity; and transmit, by the UPF, the downlink data in the session to the AN directly according to the indication information, and determining, by the AN, the QoS corresponding to the downlink data in the session according to the indication information; and/or a fifth transmitting sub-module, configured to transmit the indication information to the UE, and the UE determines a QoS corresponding to the uplink data in the session according to the indication information.

Optionally, the first determining module 601 includes: a third obtaining sub-module, configured to obtain session type indication information indicating that the session is used for transferring unstructured data when establishing a session for transferring unstructured data for the UE. The fourth transmitting sub-module includes: a seventh transmitting unit, configured to transmit the session type indication information to the UPF and the AN, and transmit, by the UPF, the downlink data in the session directly to the AN according to the session type indication information, and determine, by the AN, the radio bearer having the QoS corresponding to the downlink data in the session according to the session type indication information and the preconfigured radio bearer having a QoS corresponding to the session type for the unstructured data transmission. The fifth transmitting sub-module includes: an eighth transmitting unit, configured to transmit the session type indication information to the UE, where the UE determines the radio bearer having the QoS corresponding to the uplink data in the session according to the session type indication information and a pre-configured radio bearer having the QoS corresponding to the session type for unstructured data transmission.

Optionally, the QoS identifier is at least one of a QoS flow identifier and a QoS identifier.

In the QoS control device of the embodiment of the present disclosure, the target node can determine the QoS of the session for transferring unstructured data according to the indication information sent by the SMF, thereby implementing the QoS control of the unstructured data packet by the network, and ensuring the QoS for unstructured data transmission and improving network performance. The technical problem in the related art that the network cannot perform the QoS control on unstructured data packets is solved.

It should be noted that the QoS control device is a device corresponding to the above QoS control method, wherein all implementation manners in the method are applicable to the device, and the same or similar technical effects can be achieved.

In some embodiments of the present disclosure, as shown in Fig. 7, a SMF is further provided, including a first memory 720, a first processor 700, a first transceiver 710, a bus interface, and a computer program stored on the first memory 720 and executed by the first processor 700. The first processor 700 is configured to read the computer program in the first memory 720, and execute the following method: determining indication information related to a QoS of a session when establishing the session for transferring unstructured data for the UE; transmitting the indication information to a target node by the first transceiver 710, and determining, by the target node, the QoS corresponding to the session according to the indication information. The first transceiver 710 is configured to receive and transmit data under the control of the first processor 700.

In Fig. 7, the bus architecture may include any number of interconnected buses and bridges, specifically linked by various circuits such as one or more processors represented by the first processor 700 and a memory represented by the first memory 720. The buses can also link various other circuits such as peripherals, voltage regulators, and power management circuits, which are well known in the art and, therefore, will not be further described herein. The buses provides interfaces. The first transceiver 710 can be a plurality of components, including a transmitter and a transceiver, for communicating with various other devices on a transmission medium. The first processor 700 is responsible for managing the buses and usual processing, and the first memory 720 can store data used by the first processor 700 to execute processing.

The first processor 700 is further configured to transmit the indication information to the UPF entity, and determine, by the UPF, the QoS identifier corresponding to the downlink data in the session according to the indication information, and determining, by the UPF, a QoS identifier corresponding to downlink data in the session according to the indication information, and adding, by the UPF, the QoS identifier to the packet header of downlink data in the session; and/or transmitting the indication information to the UE, and determining, by the UE, the QoS identifier corresponding to the uplink data in the session according to the indication information .

The first processor 700 is further configured to: when establishing a session for transferring unstructured data for the UE, assigning a corresponding first QoS identifier to the session; transmit the first QoS identifier to the UPF, The UPF uses the first QoS identifier as a QoS identifier corresponding to the downlink data in the session, and adds, by the UPF, the first QoS identifier to the packet header of the downlink data packet in the session; transmitting the first QoS identifier to the UE, and using, by the UE, the first QoS identifier as a QoS identifier corresponding to the uplink data in the session.

The first processor 700 is further configured to: when establishing a session for transferring unstructured data for the UE, obtaining session type indication information indicating that the session is used for transferring unstructured data; transmitting the session type indication information to the UPF, and obtaining, by the UPF, a second QoS identifier corresponding to the session according to the session type indication information and a pre-configured QoS identifier corresponding to the session type for unstructured data transmission; using the second QoS identifier as the QoS identifier corresponding to the downlink data in the session; and adding, by the UPF, the second QoS identifier to the packet header of the downlink data packet in the session; transmitting the session type indication information to the UE; obtaining, by the UE, a second QoS identifier corresponding to the session according to the session type indication information and a pre-configured QoS identifier corresponding to a session type for unstructured data transmission; and using the second QoS identifier as a QoS identifier corresponding to the uplink data in the session.

The first processor 700 is further configured to: when establishing a session for transferring unstructured data for the UE, transmitting a QoS policy request message of the session to the PCF entity, the QoS policy request message carrying the session type indication information for indicating that the session is used for transferring unstructured data; acquiring a QoS policy corresponding to the session returned by the PCF according to the QoS policy request message, where the QoS policy includes a flow filter of a fully-matchcd wildcard and a third QoS identifier corresponding to the session; transmitting the QoS policy to the UPF; determining, by the UPF, the QoS identifier corresponding to the downlink data of the session according to the QoS policy; and adding, by the UPF, the QoS identifier to the packet header of the downlink data packet in the session; and transmitting the QoS policy to the UE; and determining, by the UE, a QoS identifier corresponding to the uplink data in the session according to the QoS policy.

The first processor 700 is further configured to transmit the indication information to the UPF and the AN function entity, and transmitting, by the UPF, the downlink data in the session directly to the AN according to the indication information, and determining, by the AN, a QoS corresponding to the downlink data in the session according to the indication information; and/or transmit the indication information to the UE, and determine, by the UE, the QoS corresponding to the uplink data in the session according to the indication information.

The first processor 700 is further configured to: when establishing a session for transferring unstructured data for the UE, obtain session type indication information indicating that the session is used for transferring unstructured data; transmit the session type indication information to the UPF and the AN, and transmit, by the UPF, the downlink data in the session directly to the AN according to the session type indication information, and determine, by the AN, the radio bearer having the QoS corresponding to the downlink data in the session according to the session type indication information and the pre-configured radio barrier having the QoS corresponding to the session type used for transferring unstructured data; transmit the session type indication information to the UE, determine, by the UE, the radio bearer having the QoS corresponding to uplink data in the session according to the session type indication information and a pre-configured radio bearer having the QoS corresponding to the session type used for transferring unstructured data.

The QoS identifier is at least one of a QoS flow identifier and a QoS identifier.

In some embodiments of the present disclosure, there is also provided a computer readable storage medium having stored thereon a computer program that, when executed by a processor, implements the following steps: determining indication information related to a QoS of a session when establishing a session for transferring unstructured data for the user equipment UE; and transmitting the indication information to the target node, and determining, by the target node, the QoS corresponding to the session according to the indication information.

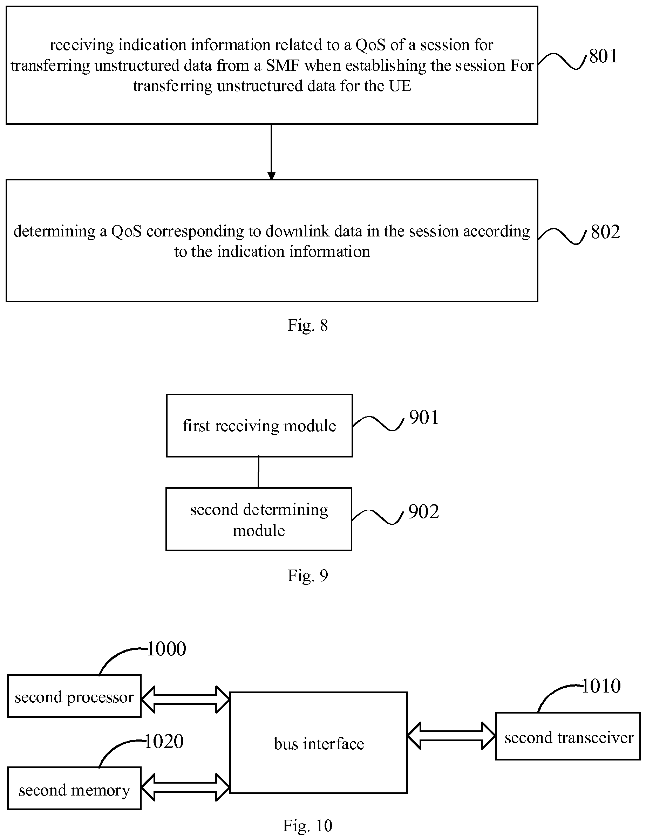

In some examples of the present disclosure, as shown in Fig. 8, a QoS control method applied to the UPF is further provided, which includes: step 801: receiving, by the SMF entity, indication information related to the QoS of the session when establishing a session for transferring unstructured data for the UE; Step 802: determining a QoS corresponding to downlink data in the session according to the indication information.

In the QoS control method of the embodiment of the present disclosure, the UPF receives the indication information related to the QoS of the session sent by the SMF when establishing a session for transferring the unstructured data for the UE, and the QoS corresponding to the downlink data in the session can be determined according to the indication information, thereby achieving the QoS control of unstructured data packets by the network, ensuring the QoS for unstructured data transmission and improving network performance. The technical problem in the related art that the network cannot perform QoS control on unstructured data packets is solved.

Optionally, the foregoing step 802 includes step 8021: determining a QoS identifier corresponding to downlink data in the session according to the indication information, and adding the QoS identifier to a packet header of a downlink data packet in the session.

At this time, the UPF can determine the QoS identifier corresponding to the downlink data in the session according to the indication information, and add the QoS identifier to the packet header of the downlink data packet of the session, thereby implementing the QoS control of the unstructured data packet by the network. The UPF adds the QoS identifier to the packet header of the downlink data packet in the session, and the UPF transmits the downlink data to the AN function entity, and the AN can select the radio bearer having the corresponding QoS according to the QoS identifier of the data packet header to transmit the downlink data, thus ensuring the QoS of the data transmission.

Optionally, the step 801 includes step 8011: receiving a first QoS identifier from the SMF, where the first QoS identifier is a QoS identifier assigned to the session when the SMF establishes a session for transferring unstructured data for the UE.

The above step 8021 includes step 80211: using the first QoS identifier as a QoS identifier corresponding to downlink data in the session, and adding the first QoS identifier to a packet header of a downlink data packet in the session.

At this time, the SMF may assign a first QoS identifier to the session when establishing a session for transferring unstructured data for the UE. The SMF transmits the first QoS identifier to the UPF, and the UPF can directly use the first QoS identifier as the QoS identifier corresponding to the downlink data in the session, and add the first QoS identifier to the packet header of the downlink data packet in the session, thereby implementing the QoS control of unstructured data packets for the UE. The UPF adds the first QoS identifier to the packet header of the downlink data packet in the session, and the UPF transmits the downlink data to the AN, and the AN can select the radio bearer having the corresponding QoS according to the first QoS identifier of the data packet header to transmit the downlink data, thereby ensuring the QoS of the data transmission.

Optionally, the above step 801 includes step 8012: receiving session type indication information from the SMF to indicate that the session is used for transferring unstructured data.

The above step 8021 includes step 80212: obtaining the second QoS identifier corresponding to the session according to the session type indication information and the pre-configured QoS identifier corresponding to the session type for the unstructured data transmission; and step 80213: using the second QoS identifier as a QoS identifier corresponding to downlink data in the session, and adding the second QoS identifier to a packet header of a downlink data packet in the session.

At this time, when the SMF establishes a session for transferring the unstructured data for the UE, the session type indication information indicating that the session is used for transferring unstructured data is obtained, and the SMF transmits the session type indication information to the UPF. The default QoS identifier for the session type, that is, the second QoS identifier, is pre-configured on the UPF. The UPF obtains the second QoS identifier corresponding to the session when the session is used for transferring the unstructured data according to the session type indication information, and then uses the second QoS identifier as the QoS identifier corresponding to the downlink data in the session, and add the second QoS identifier to the packet header of the downlink data packets in the session, thereby implementing the QoS control of the unstructured data packet by the network.

The UPF addes the second QoS identifier to the packet header of the downlink data packet in the session, and the UPF transmits the downlink data to the AN, and the AN can select the radio bearer having the corresponding QoS according to the second QoS identifier of the data packet header to transmit the downlink data, thereby ensuring the QoS of the data transmission.

Optionally, the above step 801 includes step 8013: receiving a QoS policy from the SMF, where the QoS policy includes a flow filter of a fully-matched wildcard and a third QoS identifier corresponding to the session. When the SMF establishes the session for transferring the unstructured data for the UE, after a QoS policy request message for the session is sent to the PCF entity, the QoS policy is a QoS policy corresponding to the session returned by the PCF according to the QoS policy request message. The QoS policy request message carries session type indication information indicating that the session is used for transferring unstructured data.

The above step 8021 includes step 80214: determining a QoS identifier corresponding to the downlink data in the session according to the QoS policy, and adding, by the UPF, the QoS identifier to the packet header of the downlink data packet in the session.

At this time, when establishing a session for transferring unstructured data for the UE, the SMF may request a QoS policy rule from the PCF, and transmit the QoS request message carrying the session type indication information indicating that the session is used for transferring unstructured data to the PCF. The PCF establishes a QoS rule for the session for transferring unstructured data, including a flow filter of fully matched wildcard and a third QoS identifier corresponding to the session.

The SMF transmits the QoS rule to the UPF. The UPF determines the QoS identifier corresponding to the downlink data in the session according to the QoS rule, and adds the QoS identifier to the packet header of the downlink packet in the session, thereby implementing the QoS control of the unstructured data packet by the network. Since the flow filter of the QoS rule is a fully matched wildcard, the UPF can determine that the QoS identifier corresponding to all downlink data of the session is the third QoS identifier, and the third QoS identifier is added to the packet header of all downlink packets in the session. The UPF adds the third QoS identifier to the packet header of the downlink data packet in the session, and the UPF transmits the downlink data to the AN, and the AN can select the radio bearer having the corresponding QoS according to the third QoS identifier of the data packet header to transmit the downlink data, thereby ensuring the QoS of the data transmission.

Optionally, the step 802 includes step 8022: transmitting the downlink data in the session to the AN function according to the indication information, and determining, by the AN, the QoS corresponding to the downlink data in the session according to the indication information sent by the SMF when establishing the session for transferring unstructured data for the UE.

At this time, the SMF transmits the indication information to the UPF and the AN, and the UPF can directly transmit the downlink data in the session to the AN according to the indication information, and the AN determine the QoS corresponding to the downlink data in the session, thereby implementing the QoS control of the unstructured data packets by the network.

Optionally, the step 801 includes step 8014: receiving session type indication information indicating that the session is used for transferring unstructured data from the SMF.

The above step 8022 includes step 80221: transmitting the downlink data in the session directly to the AN according to the session type indication information, and determining, by the AN, the radio bearer having the QoS corresponding to the downlink data in the session according to the session type indication information that is sent to the AN by the SMF when establishing a session for transferring unstructured data for the UE and a pre-configured radio bearer having the QoS corresponding to the session type for unstructured data transmission.

At this time, when the SMF establishes a session for transferring unstructured data for the UE, the SMF may obtain session type indication information indicating that the session is used for transferring unstructured data. The SMF transmits session type indication information to the UPF and AN. The UPF directly transmits the downlink data in the session to the AN when the session is determined to be used for transferring unstructured data according to the session type indication information. The radio bearer having the QoS corresponding to the session type for the unstructured data transmission is pre-configured on the AN. The AN receives the downlink data from the UPF, and determines that the session is used for transferring the unstructured data, and obtains the radio bearer having the QoS corresponding to the session to transmits the downlink data, thereby realizing the QoS control of the unstructured data packet by the network and ensuring the QoS of the data transmission.

In the QoS control method of the example of the present disclosure, the UPF can determine the QoS for the session for transferring unstructured data according to the indication information sent by the SMF, thereby implementing the QoS control of the unstructured data packet by the network, and ensuring the QoS of unstructured data transmission and improving network performance. The technical problem in the related art that the network cannot perform QoS control on unstructured data packets is solved.

In some examples of the present disclosure, as shown in Fig. 9, a QoS control device applied to the UPF is further provided, which includes: a first receiving module 901, configured to receive, by the SMF entity, indication information related to the QoS of the session when establishing a session for transferring unstructured data for the UE; a second determining module 902, configured to determine a QoS corresponding to downlink data in the session according to the indication information.

The QoS control device of the example of the present disclosure, the UPF receives the indication information related to the QoS of the session sent by the SMF when establishing a session for transferring the unstructured data for the UE, and the QoS corresponding to the downlink data in the session can be determined according to the indication information, thereby achieving the QoS control of unstructured data packets by the network, ensuring the QoS for unstructured data transmission and improving network performance. The technical problem in the related art that the network cannot perform QoS control on unstructured data packets is solved.

Optionally, the second determining module 902 includes: a first determining sub-module, configured to determine a QoS identifier corresponding to downlink data in the session according to the indication information, and adding the QoS identifier to a packet header of a downlink data packet in the session.

Optionally, the first receiving module 901 includes: a first receiving sub-module, configured to receive a first QoS identifier from the SMF, where the first QoS identifier is a QoS identifier assigned to the session when the SMF establishes a session for transferring unstructured data for the UE.

The first determining sub-module includes: a first determining unit, configured to use the first QoS identifier as a QoS identifier corresponding to downlink data in the session, and add the first QoS identifier to a header of a downlink data packet in the session.

Optionally, the first receiving module 901 includes: a second receiving sub-module, configured to receive session type indication information from the SMF to indicate that the session is used for transferring unstructured data.

The first determining sub-module includes: a first obtaining unit, configured to obtain the second QoS identifier corresponding to the session according to the session type indication information and the pre-configured QoS identifier corresponding to the session type for the unstructured data transmission; and a second determining unit, configured to use the second QoS identifier as a QoS identifier corresponding to downlink data in the session, and add the second QoS identifier to a packet header of a downlink data packet in the session.

The first receiving module 901 includes: a third receiving sub-module, configured to receive a QoS policy from the SMF, where the QoS policy includes a flow filter of a fully-matched wildcard and a third QoS identifier corresponding to the session. When the SMF establishes the session for transferring the unstructured data for the UE, after a QoS policy request message for the session is sent to the PCF entity, the QoS policy is a QoS policy corresponding to the session returned by the PCF according to the QoS policy request message. The QoS policy request message carries session type indication information indicating that the session is used for transferring unstructured data.

The first determining sub-module includes: a third determining unit, configured to determine a QoS identifier corresponding to the downlink data in the session according to the QoS policy, and add, by the UPF, the QoS identifier to the packet header of the downlink data packet in the session.

Optionally, the second determining module 902 includes: a sixth transmitting sub-module, configured to transmit the downlink data in the session to the AN function according to the indication information, and determine, by the AN, the QoS corresponding to the downlink data in the session according to the indication information sent by the SMF when establishing a session for transferring unstructured data for the UE.

Optionally, the first receiving module 901 includes: a fourth receiving sub-module, configured to receive session type indication information to indicate that the session is used for transferring unstructured data from the SMF. The sixth transmitting sub-module includes a ninth transmitting unit, configured to transmit the downlink data in the session directly to the AN according to the session type indication information, and determine, by the AN, the radio bearer having the QoS corresponding to the downlink data in the session according to the session type indication information that is sent to the AN by the SMF when establishing a session for transferring unstructured data for the UE and a pre-configured radio bearer having the QoS corresponding to the session type for unstructured data transmission.

In the QoS control device of the examples of the present disclosure, the UPF can determine the QoS for the session for transferring unstructured data according to the indication information sent by the SMF, thereby implementing the QoS control of the unstructured data packet by the network, and ensuring the QoS of unstructured data transmission and improving network performance. The technical problem in the related art that the network cannot perform QoS control on unstructured data packets is solved.

It should be noted that the QoS control device is a device corresponding to the QoS control method, wherein all implementation manners in the method are applicable to the device, and the same or similar technical effects can be achieved.

In some examples of the present disclosure, as shown in FIG. 10, a UPF includes a second memory 1020, a second processor 1000, a second transceiver 1010, a bus interface, and a computer program stored on the memory 1020 and executed by the second processor 1000. The second processor 1000 is configured to read the program in the second memory 1020, and execute the following method: receiving, by the SMF entity, indication information related to the QoS of the session when establishing a session for transferring unstructured data for the UE; determining a QoS corresponding to downlink data in the session according to the indication information. The second transceiver 1010 is configured to receive and transmit data under the control of the second processor 1000.

In Fig. 10, the bus architecture may include any number of interconnected buses and bridges, specifically linked by various circuits such as one or more processors represented by the second processor 1000 and a memory represented by the second memory 1020. The buses can also link various other circuits such as peripherals, voltage regulators, and power management circuits, which are well known in the art and, therefore, will not be further described herein. The buses provides interfaces. The second transceiver 1010 can be a plurality of components, including a transmitter and a transceiver, for communicating with various other devices on a transmission medium. The second processor 1000 is responsible for managing the bus architecture and normal processing, and the second memory 1020 can store data used by the second processor 1000 when performing operations.

The second processor 1000 is further configured to determine a QoS identifier corresponding to downlink data in the session according to the indication information, and adding the QoS identifier to a packet header of a downlink data packet in the session.

The second processor 1000 is further configured to receive a first QoS identifier from the SMF, where the first QoS identifier is a QoS identifier assigned to the session when the SMF establishes a session for transferring unstructured data for the UE; using the first QoS identifier as a QoS identifier corresponding to downlink data in the session, and adding the first QoS identifier to a header of a downlink data packet in the session; or receiving session type indication information from the SMF to indicate that the session is used for transferring unstructured data, obtaining the second QoS identifier corresponding to the session according to the session type indication information and the pre-configured QoS identifier corresponding to the session type for the unstructured data transmission, using the second QoS identifier as a QoS identifier corresponding to downlink data in the session, and adding the second QoS identifier to a packet header of a downlink data packet in the session; or receiving a QoS policy from the SMF, where the QoS policy includes a flow filter of a fully-matched wildcard and a third QoS identifier corresponding to the session. When the SMF establishes the session for transferring the unstructured data for the UE, after a QoS policy request message for the session is sent to the PCF entity, the QoS policy is a QoS policy corresponding to the session returned by the PCF according to the QoS policy request message. The QoS policy request message carries session type indication information indicating that the session is used for transferring unstructured data; determining a QoS identifier corresponding to the downlink data in the session according to the QoS policy, and adding, by the UPF, the QoS identifier to the packet header of the downlink data packet in the session.

The second processor 1000 is further configured to transmit the downlink data in the session to the AN function according to the indication information, and determine, by the AN, the QoS corresponding to the downlink data in the session according to the indication information sent by the SMF when establishing a session for transferring unstructured data for the UE.

The second processor 1000 is further configured to receive session type indication information to indicate that the session is used for transferring unstructured data from the SMF. The sixth transmitting sub-module includes a ninth transmitting unit, configured to transmit the downlink data in the session directly to the AN according to the session type indication information, and determine, by the AN, the radio bearer having the QoS corresponding to the downlink data in the session according to the session type indication information that is sent to the AN by the SMF when establishing a session for transferring unstructured data for the UE and a preconfigured radio bearer having the QoS corresponding to the session type for unstructured data transmission.

In some examples of the present disclosure, there is also provided a computer readable storage medium having stored thereon a computer program that, when executed by a processor, implements the following steps: receiving, by the SMF entity, indication information related to the QoS of the session when establishing a session for transferring unstructured data for the UE; determining a QoS corresponding to downlink data in the session according to the indication information.

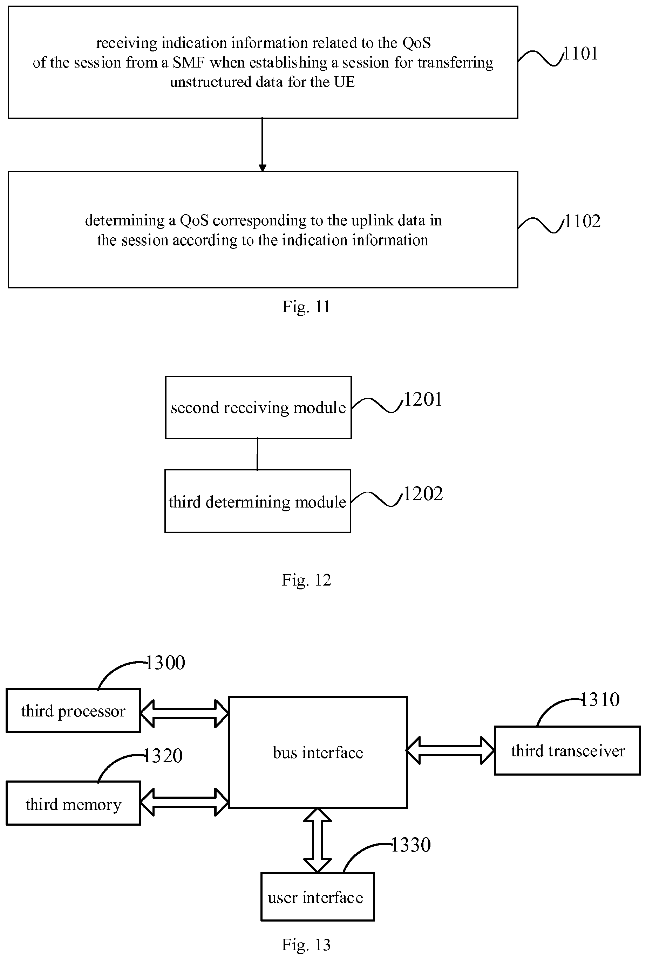

In some embodiments of the present disclosure, as shown in FIG. 11, a QoS control method applied to a UE, includes: step 1101: receiving indication information related to a QoS of a session from SPF when establishing a session for transferring unstructured data for the UE; and step 1102: determining a QoS corresponding to the uplink data in the session according to the indication information.

In the QoS control method of the embodiment of the present disclosure, the UE receives the indication information related to the QoS of the session that is sent by the SMF when establishing the session for transferring the unstructured data for the UE, and determines the QoS corresponding to the uplink data in the session according to the indication information, thereby achieving the QoS control of unstructured data packets by the network, ensuring QoS for unstructured data transmission and improving network performance. The technical problem in the related art that the network cannot perform QoS control on unstructured data packets is solved.

Optionally, the foregoing step 1101 includes step 11011: receiving a first QoS identifier from the SMF, the first QoS identifier being a QoS identifier assigned to a session for transferring unstructured data when establishing the session for transferring unstructured data for the UE

The above step 1102 includes step 11021: using the first QoS identifier as a QoS identifier corresponding to the uplink data in the session.

At this time, the SMF may assign a corresponding first QoS identifier to the session when establishing the session for transferring the unstructured data for the UE, and the SMF transmits the first QoS identifier to the UE, and the UE may directly use the first QoS identifier as a QoS identifier corresponding to the uplink data in the session, thereby implementing the QoS control of the unstructured data packet by the network. The UE can select the radio bearer having the corresponding QoS according to the first QoS identifier to transmit the uplink data, thereby ensuring the QoS of the data transmission.

Optionally, the step 1101 includes step 11012: receiving session type indication information from the SMF to indicate that the session is used for transferring unstructured data.

The step 1102 includes step 11022: obtaining the second QoS identifier corresponding to the session according to the session type indication information and the pre-configured QoS identifier corresponding to the session type for the unstructured data transmission; and step 11023: using the second QoS identifier as a QoS identifier corresponding to the uplink data in the session.

At this time, the SMF obtains the session type indication information indicating that the session is used for transferring unstructured data when establishing a session for transferring the unstructured data for the UE. The SMF transmits the session type indication information to the UE. The default QoS identifier for the session type, that is, the second QoS identifier, is pre-configured on the UE. The UE determines the session is used for transferring the unstructured data, according to the session type indication information, obtains the second QoS identifier corresponding to the session, and then uses the second QoS identifier as the QoS identifier corresponding to the uplink data in the session, thereby implementing the QoS control for unstructured data packets by the network. The UE can select the radio bearer having the corresponding QoS according to the second QoS identifier to transmit the uplink data, thereby ensuring the QoS of the data transmission.

Optionally, the step 1101 includes step 11013: receiving a QoS policy from the SMF, where the QoS policy includes a flow filter of a fully-matched wildcard and a third QoS identifier corresponding to the session. When the SMF establishes the session for transferring the unstructured data for the UE, after a QoS policy request message for the session is sent to the PCF entity, the QoS policy is a QoS policy corresponding to the session returned by the PCF according to the QoS policy request message. The QoS policy request message carries session type indication information indicating that the session is used for transferring unstructured data. The step 1102 includes step 11024: determining a QoS identifier corresponding to the uplink data in the session according to the QoS policy.

When establishing a session for transferring unstructured data for the UE, the SMF may request a QoS policy rule from the PCF, and transmit the QoS policy request carrying the session type indication information indicating the session for transferring unstructured data to the PCF. The PCF establishes a QoS policy rule for the session for transferring the unstructured data, including a flow filter of the fully-matched wildcard and a third QoS identifier corresponding to the session. The SMF transmits the QoS rule to the UE, the UE may determine the QoS identifier corresponding to the uplink data in the session according to the QoS rule, thereby implementing the QoS control of the unstructured data packet by the network. Since the flow filter of the QoS rule is a fully matched wildcard, the UE can determine that the QoS identifier corresponding to all uplink data in the session is the third QoS identifier, and the UE subsequently select the radio bearer having the corresponding QoS according to the third QoS identifier to transmits the uplink data, thereby ensuring the QoS of the data transmission.

Optionally, the step 1101 includes step 11014: receiving session type indication information from the SMF to indicate that the session is used for transferring unstructured data.

The step 1102 includes step 11025: determining the radio bearer having the QoS corresponding to the uplink data in the session according to the session type indication information and the pre-configured radio bearer having the QoS corresponding to the session type for the unstructured data transmission.

At this time, when establishing a session for transferring the unstructured data for the UE, the SMF may obtain the session type indication information indicating that the session is used for transferring unstructured data. The SMF transmits the session type indication information to the UE. The radio bearer having the QoS corresponding to the session type for unstructured data transmission is pre-configured on the UE. The UE determines that the session is used for transferring unstructured data according to the session type indication information, and obtains the radio bearer having the QoS corresponding to the session to transmit the uplink data, thereby implementing the QoS control of the unstructured data packet by the network, and ensuring the QoS of the data transmission.

In the QoS control method of the embodiment of the present disclosure, the UE can determine the QoS for the session for transferring unstructured data according to the indication information sent by the SMF, thereby implementing the QoS control of the unstructured data packets by the network, ensuring the QoS of unstructured data transmission, and improving network performance. The technical problem in the related art that the network cannot perform QoS control on unstructured data packets is solved.

In some examples of the present disclosure, as shown in Fig. 12, a QoS control device applied to the UE includes: a second receiving module 1201, configured to receive from SPF, indication information related to the QoS of the session when establishing a session for transferring unstructured data for the UE; and a third determining module 1202, configured to determine a QoS corresponding to the uplink data in the session according to the indication information.

In the QoS control device of the example of the present disclosure, the UE receives the indication information related to the QoS of the session that is sent by the SMF when establishing the session for transferring the unstructured data for the UE, and determines the QoS corresponding to the uplink data in the session according to the indication information, thereby achieving the QoS control of unstructured data packets by the network, ensuring QoS for unstructured data transmission and improving network performance. The technical problem in the related art that the network cannot perform QoS control on unstructured data packets is solved.

Optionally, the second receiving module 1201 includes: a fifth receiving sub-module, configured to receive a first QoS identifier from the SMF, where the first QoS identifier is a QoS identifier assigned to the session when the SMF establishes a session for transferring unstructured data for the UE. The third determining module 1202 includes a second determining sub-module, configured to use the first QoS identifier as a QoS identifier corresponding to the uplink data in the session. Optionally, the second receiving module 1201 includes a sixth receiving sub-module, configured to receive session type indication information from the SMF to indicate that the session is used for transferring unstructured data.

The third determining module 1202 includes a fourth obtaining sub-module, configured to obtain the second QoS identifier corresponding to the session according to the session type indication information and the pre-configured QoS identifier corresponding to the session type for the unstructured data transmission; and a third determining sub-module, configured to use the second QoS identifier as a QoS identifier corresponding to the uplink data in the session.

Optionally, the second receiving module 1201 includes: a seventh receiving sub-module, configured to receive a QoS policy from the SMF, where the QoS policy includes a flow filter of a fully-matched wildcard and a third QoS identifier corresponding to the session. When the SMF establishes the session for transferring the unstructured data for the UE, after a QoS policy request message for the session is sent to the PCF entity, the QoS policy is a QoS policy corresponding to the session returned by the PCF according to the QoS policy request message. The QoS policy request message carries session type indication information indicating that the session is used for transferring unstructured data.

The third determining module 1202 includes a fourth determining sub-module, configured to determine a QoS identifier corresponding to the uplink data in the session according to the QoS policy.

Optionally, the second receiving module 1201 includes: an eighth receiving sub-module, configured to receive session type indication information from the SMF to indicate that the session is used for transferring unstructured data. The third determining module 1202 includes a fifth determining sub-module, configured to determine the radio bearer having the QoS corresponding to the uplink data in the session according to the session type indication information and the pre-configured radio bearer having the QoS corresponding to the session type for the unstructured data transmission.

In the QoS control device of the example of the present disclosure, the UE can determine the QoS for the session for transferring unstructured data according to the indication information sent by the SMF, thereby implementing the QoS control of the unstructured data packets by the network, ensuring the QoS of unstructured data transmission, and improving network performance. The technical problem in the related art that the network cannot perform QoS control on unstructured data packets is solved.

It should be noted that the QoS control device is a device corresponding to the QoS control method, wherein all implementation in the method examples are applicable to the device, and the same or similar technical effects can be achieved.

In some examples of the present disclosure, referring to FIG. 13, a UE includes a third memory 1320, a third processor 1300, a third transceiver 1310, a user interface 1330, a bus interface, and computer program stored on the third memory 1320 and excuted by the third processor 1300, the third processor 1300 is configured to read a program in the third memory 1320, and perform the following method: receiving, by the third transceiver 1310, indication information related to the QoS of the session when establishing a session for transferring unstructured data for the UE from SMF; determining a QoS corresponding to the uplink data in the session according to the indication information. The third transceiver 1310 is configured to receive and transmit data under the control of the third processor 1300.

In Fig. 13, the bus architecture may include any number of interconnected buses and bridges, specifically linked by various circuits such as one or more processors represented by the third processor 1300 and a memory represented by the third memory 1320.. The bus architecture can also link various other circuits such as peripherals, voltage regulators, and power management circuits, which are well known in the art and, therefore, will not be further described herein. The bus interface provides interfaces. The third transceiver 1310 can be a plurality of components, including a transmitter and a transceiver, for communicating with various other devices on a transmission medium. For different UEs, the user interface 1330 may also be an interface capable of externally or internally connecting required devices, including but not limited to a keypad, a display, a speaker, a microphone, a joystick, and the like.

The third processor 1300 is responsible for managing the buses and general processing, and the third memory 1320 can store data used by the third processor 1300 when performing operations.

The third processor 1300 is further configured to receive a first QoS identifier from the SMF, where the first QoS identifier is a QoS identifier assigned to the session when the SMF establishes a session for transferring unstructured data for the UE; using the first QoS identifier as a QoS identifier corresponding to uplink data in the session; or receiving session type indication information from the SMF to indicate that the session is used for transferring unstructured data, obtaining the second QoS identifier corresponding to the session according to the session type indication information and the pre-configured QoS identifier corresponding to the session type for the unstructured data transmission, using the second QoS identifier as a QoS identifier corresponding to downlink data in the session; or receiving a QoS policy from the SMF, where the QoS policy includes a flow filter of a fully-matched wildcard and a third QoS identifier corresponding to the session. When the SMF establishes the session for transferring the unstructured data for the UE, after a QoS policy request message for the session is sent to the PCF entity, the QoS policy is a QoS policy corresponding to the session returned by the PCF according to the QoS policy request message. The QoS policy request message carries session type indication information indicating that the session is used for transferring unstructured data; determining a QoS identifier corresponding to the uplink data in the session according to the QoS policy.

The third processor 1300 is further configured to receive from the SMF, session type indication information indicating that the session is used for transferring unstructured data; and determine the radio bearer having the QoS corresponding to the uplink data in the session according to the session type indication information and a pre-configured radio bearer having the QoS corresponding to the session type for unstructured data transmission.

In some examples of the present disclosure, there is also provided a computer readable storage medium having stored thereon a computer program that, when executed by a processor, implements the following steps: receiving indication information related to the QoS of the session when establishing a session for transferring unstructured data for the UE from the SMF entity; determining a QoS corresponding to the uplink data in the session according to the indication information.

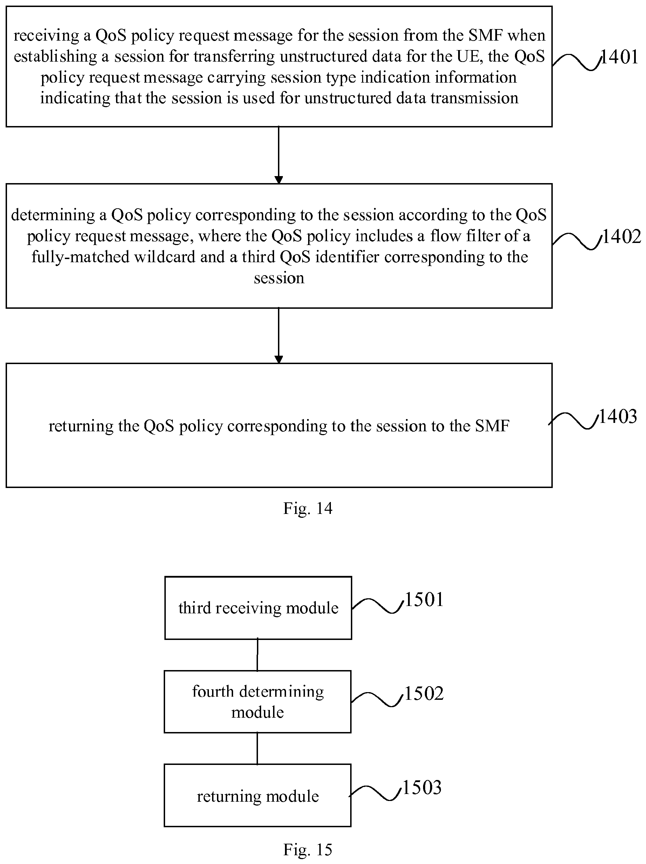

In some examples of the present disclosure, as shown in Fig. 14, a QoS control method applied to the PCF includes the following steps.

Step 1401: receiving a QoS policy request message for a session for transferring unstructured data from a session management function (SMF) when establishing the session for transferring unstructured data for the UE, where the QoS policy request message carrying session type indication information indicating the session is used for transferring unstructured data.

Step 1402: determining a QoS policy corresponding to the session according to the QoS policy request message, where the QoS policy includes a flow filter of a fully-matched wildcard and a third QoS identifier corresponding to the session.

Step 1403: returning the QoS policy corresponding to the session to the SMF.

In the QoS control method of the example of the present disclosure, the PCF provides a QoS policy for the session for transferring the unstructured data to the SMF, and the SMF transmits the QoS policy to the target node, and the target node can determine the QoS of the session for transferring unstructured data according the QoS policy sent by the SMF, thereby implementing the QoS control of the unstructured data packets by the network, ensuring the QoS for unstructured data transmission, and improving the network performance. The technical problem in the related art that the network cannot perform QoS control on unstructured data packets is solved.

In some examples of the present disclosure, as shown in Fig. 15, a QoS control devices applied to the PCF includes: a third receiving module 1501 is configured to receive a QoS policy request message for the session when establishing a session for transferring unstructured data for the UE from the SMF, where the QoS policy request message carries an session type indication information indicating the session is used for transferring unstructured data; and a fourth determining module 1502, configured to determine a QoS policy corresponding to the session according to the QoS policy request message, where the QoS policy includes a flow filter of a fully-matched wildcard and a third QoS identifier corresponding to the session; and a returning module 1503, configured to return the QoS policy corresponding to the session to the SMF.

In the QoS control device of the example of the present disclosure, the PCF provides a QoS policy for the session for transferring the unstructured data to the SMF, and the SMF transmits the QoS policy to the target node, and the target node can determine the QoS of the session for transferring unstructured data according the QoS policy sent by the SMF, thereby implementing the QoS control of the unstructured data packets by the network, ensuring the QoS for unstructured data transmission, and improving the network performance. The technical problem in the related art that the network cannot perform QoS control on unstructured data packets is solved.

It should be noted that the QoS control device is a device corresponding to the foregoing QoS control method, wherein all implementation in the foregoing method are applicable to the device, and the same or similar technical effects can be achieved.

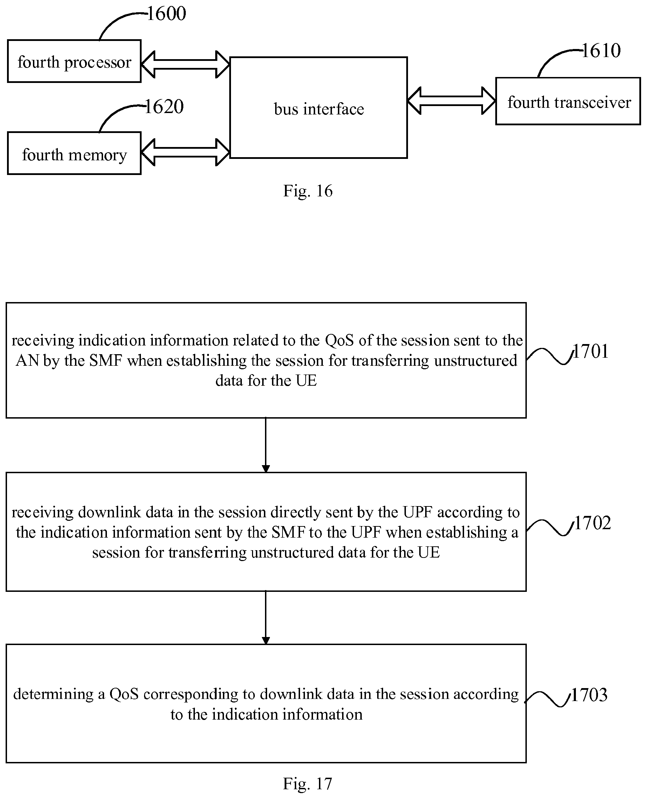

In some examples of the present disclosure, as shown in Fig. 16, a PCF includes a fourth memory 1620, a fourth processor 1600, a fourth transceiver 1610, a bus interface, and a computer program stored on the fourth memory 1620 and executed by the fourth processor 1600, the fourth processor 1600 is configured to read the program in the fourth memory 1620, and perform the following method: receiving, by the fourth transceiver 1610, a QoS policy request message for the session when establishing a session for transferring unstructured data for the UE from the SMF, where the QoS policy request message carries an session type indication information indicating the session is used for transferring unstructured data; determining, a QoS policy corresponding to the session according to the QoS policy request message, where the QoS policy includes a flow filter of a fully-matched wildcard and a third QoS identifier corresponding to the session; and returning, by the fourth transceiver 1610, the QoS policy corresponding to the session to the SMF. The fourth transceiver 1610 is configured to receive and transmit data under the control of the fourth processor 1600.

In Fig. 16, the bus architecture may include any number of interconnected buses and bridges, specifically linked by various circuit such as one or more processors represented by the fourth processor 1600 and the memory represented by the fourth memory 1620. The bus architecture can also link various other circuits such as peripherals, voltage regulators, and power management circuits, which are well known in the art and, therefore, will not be further described herein. The bus interface provides interfaces. The fourth transceiver 1610 can be a plurality of components, including a transmitter and a transceiver, for communicating with various other devices on a transmission medium. The fourth processor 1600 is responsible for managing the bus architecture and the usual processing, and the fourth memory 1620 can store data used by the fourth processor 1600 when performing operations.

In some examples of the present disclosure, there is also provided a computer readable storage medium having stored thereon a computer program that, when executed by a processor, implements the following steps: receiving a QoS policy request message for the session when establishing a session for transferring unstructured data for the UE from the SMF, where the QoS policy request message carries an session type indication information indicating the session is used for transferring unstructured data; determining a QoS policy corresponding to the session according to the QoS policy request message, where the QoS policy includes a flow filter of a fully-matched wildcard and a third QoS identifier corresponding to the session; and returning the QoS policy corresponding to the session to the SMF.

In some examples of the present disclosure, as shown in Fig. 17, a QoS control method applied to an AN function includes: step 1701: receiving indication information related to the QoS of the session sent to the AN by the SMF when establishing a session for transferring unstructured data for the UE; step 1702: receiving downlink data in the session directly sent by the UPF according to the indication information sent by the SMF to the UPF when establishing the session for transferring unstructured data for the UE; and step 1703: determining a QoS corresponding to downlink data in the session according to the indication information.

In the QoS control method of the example of the present disclosure, the SMF transmits the indication information to the UPF and the AN, and the UPF can directly transmit the downlink data in the session to the AN according to the indication information, and the UPF does not need to tag the the data packet header with the QoS identifier. The QoS corresponding to the downlink data of the session is determined by the AN, thereby realizing the QoS control of the unstructured data packet by the network, ensuring the QoS of unstructured data transmission and improving network performance. The technical problem in the related art that the network cannot perform QoS control on unstructured data packets is solved.

Optionally, the step 1701 includes step 17011: receiving session type indication information that is sent by the SMF to the AN to indicate that the session is used for transferring unstructured data.

The step 1703 includes step 17031: determining a radio bearer having a QoS corresponding to the downlink data in the session according to the session type indication information and a pre-configured radio bearer having a QoS corresponding to the session type for the unstructured data transmission.

At this time, when establishing a session for transferring the unstructured data for the UE, the SMF obtains the session type indication information indicating that the session is used for transferring unstructured data. The SMF transmits the session type indication information to the UPF and the AN. The UPF transmits the downlink data in the session to the AN directly when the session is used for transferring the unstructured data according to the session type indication information, and the UPF does not need to tag the data packet header with the QoS identifier. The radio bearer having the QoS corresponding to the session type for the unstructured data transmission is pre-configured on the AN, and the AN receives the downlink data sent by the UPF, and determines that the session is used for transferring the unstructured data, and obtains the radio bearer having the QoS corresponding to the session to transmit the downlink data, thereby realizing the QoS control of the unstructured data packet by the network and ensuring the QoS of the data transmission.

In the QoS control method of the example of the present disclosure, the SMF transmits the indication information to the UPF and the AN, and the UPF can directly transmit the downlink data in the session to the AN according to the indication information, and the UPF does not need to tag the data packet header with the QoS identifier, and the QoS corresponding to the downlink data in the session is determined by the AN, thereby realizing the QoS control of the unstructured data packet, ensuring the QoS of unstructured data transmission and improving network performance. The technical problem in the related art that the network cannot perform QoS control on unstructured data packets is solved.

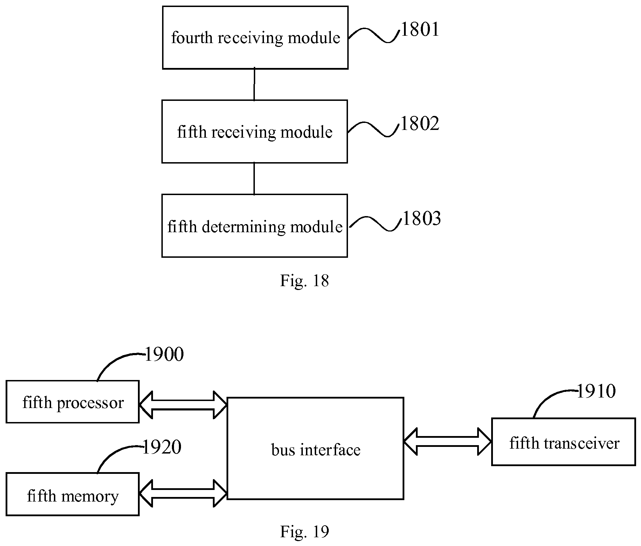

In some examples of the present disclosure, as shown in Fig. 18, a QoS control device applied to an AN function includes: a fourth receiving module 1801, configured to receive indication information related to the QoS of the session sent to the AN by the SMF when establishing a session for transferring unstructured data for the UE; a fifth receiving module 1802, configured to receive downlink data in the session directly sent by the UPF according to the indication information sent by the SMF to the UPF when establishing a session for transferring unstructured data for the UE; and a fifth determining module 1803, configured to determine a QoS corresponding to downlink data in the session according to the indication information.

The QoS control device of the example of the present disclosure, the SMF transmits the indication information to the UPF and the AN, and the UPF can directly transmit the downlink data in the session to the AN according to the indication information, and the UPF does not need to tag the the data packet header with the QoS identifier. The QoS corresponding to the downlink data of the session is determined by the AN, thereby realizing the QoS control of the unstructured data packet by the network, ensuring the QoS of unstructured data transmission and improving network performance. The technical problem in the related art that the network cannot perform QoS control on unstructured data packets is solved.

Optionally, the fourth receiving module 1801 includes a ninth receiving sub-module, configured to receive session type indication information that is sent by the SMF to the AN to indicate that the session is used for transferring unstructured data. The fifth determining module 1803 includes a sixth determining sub-module, configured to determine the radio bearer having the QoS corresponding to the downlink data in the session according to the session type indication information and the pre-configured radio bearer having the QoS corresponding to the session type for the unstructured data transmission.

The QoS control device of the example of the present disclosure, the SMF transmits the indication information to the UPF and the AN, and the UPF can directly transmit the downlink data in the session to the AN according to the indication information, and the UPF does not need to tag the the data packet header with the QoS identifier. The QoS corresponding to the downlink data of the session is determined by the AN, thereby realizing the QoS control of the unstructured data packet by the network, ensuring the QoS of unstructured data transmission and improving network performance. The technical problem in the related art that the network cannot perform QoS control on unstructured data packets is solved.

It should be noted that the QoS control device is a device corresponding to the foregoing QoS control method, and all the implementation in the foregoing method are applicable to the device, and the same technical effects can be achieved.

In some examples of the present disclosure, referring to Fig. 19, an AN function includes a fifth memory 1920, a fifth processor 1900, a fifth transceiver 1910, a bus interface, and a computer program stored on the fifth memory 1920 and executed by the fifth processor 1900, the fifth processor 1900 is configured to read a program in the fifth memory 1920, and perform the following method: receiving, by the fifth transceiver 1910, indication information related to the QoS of the session sent to the AN by the SMF when establishing a session for transferring unstructured data for the UE; receiving, by the fifth transceiver 1910, downlink data in the session directly sent by the UPF according to the indication information sent by the SMF to the UPF when establishing a session for transferring unstructured data for the UE; and determining a QoS corresponding to downlink data in the session according to the indication information. The fifth transceiver 1910 is configured to receive and transmit data under the control of the fifth processor 1900.

Wherein, in Fig. 19, the bus architecture may include any number of interconnected buses and bridges, specifically linked by various circuits such as one or more processors represented by the fifth processor 1900 and a memory represented by the fifth memory 1920. The bus architecture can also link various other circuits such as peripherals, voltage regulators, and power management circuits, which are well known in the art and, therefore, will not be further described herein. The bus interface provides interfaces. The fifth transceiver 1910 can be a plurality of components, including a transmitter and a transceiver, for communicating with various other devices on a transmission medium. The fifth processor 1900 is responsible for managing the bus architecture and general processing, and the fifth memory 1920 can store data used by the fifth processor 1900 when performing operations.

The fifth processor 1900 is further configured to receive session type indication information that is sent by the SMF to the AN to indicate that the session is used for transferring unstructured data; determine the radio bearer having the QoS corresponding to the downlink data in the session according to the session type indication information and the pre-configured radio bearer having the QoS corresponding to the session type for the unstructured data transmission.

In some examples of the present disclosure, there is also provided a computer readable storage medium having stored thereon a computer program that, when executed by a processor, implements the following steps: receiving indication information related to the QoS of the session sent to the AN by the SMF when establishing a session for transferring unstructured data for the UE; receiving downlink data in the session directly sent by the UPF according to the indication information sent by the SMF to the UPF when establishing a session for transferring unstructured data for the UE; and determining a QoS corresponding to downlink data in the session according to the indication information.

In the examples of the present disclosure, it should be understood that the serial numbers of the above steps does not mean the order of execution, and the order of execution should be determined by its function and internal logic, and should not limit the scope of the examples of the present disclosure.

## Claims

1. A quality of service (QoS) control method applied to a session management function (SMF), and the SMF is responsible for session management, the method comprising:
determining(101), by the SMF, indication information related to a QoS of a session when establishing the session for a user equipment (UE), wherein the SMF transmits session type indicating that the session is used for transferring unstructured data, and the unstructured data is non-IP data packets; and
transmitting(102), by the SMF, the indication information to a target node, and determining, by the target node, the QoS corresponding to the session according to the indication information.

2. The method according to claim 1, wherein the transmitting the indication information to a target node, and determining, by the target node, the QoS corresponding to the session according to the indication information comprises:
transmitting the indication information to a user plan function (UPF), and determining, by the UPF, a QoS identifier corresponding to downlink data in the session according to the indication information, and adding, by the UPF, the QoS identifier to a packet header of downlink data packet of the session the UPF is connected to the SMF; and/or
transmitting the indication information to the UE, and determining, by the UE, a QoS identifier corresponding to uplink data in the session according to the indication information.

3. The method according to claim 2, wherein
the determining indication information related to a QoS of a session for transferring unstructured data when establishing the session for transferring unstructured data for a UE comprises:
assigning a first QoS identifier to the session when establishing the session for transferring unstructured data for the UE;
the transmitting the first QoS identifier to the UPF, using, by the UPF, the first QoS identifier as the QoS identifier corresponding to the downlink data in the session, and adding, by the UPF, the first QoS identifier to the packet header of the downlink data packet comprises:
transmitting the first QoS identifier to the UPF, using, by the UPF, the first QoS identifier as the QoS identifier corresponding to the downlink data in the session, and adding, by the UPF, the first QoS identifier to the packet header of the downlink data packet;
the transmitting the indication information to the UE, and determining, by the UE, a QoS identifier corresponding to uplink data in the session according to the indication information comprises:
transmitting the first QoS identifier to the UE, and using, by the UE, the first QoS identifier as a QoS identifier corresponding to the uplink data in the session.

4. The method according to claim 2, wherein
the determining indication information related to a QoS of a session for transferring unstructured data when establishing the session for transferring unstructured data for a UE comprises:
obtaining session type indication information indicating that the session is used for transferring unstructured data when establishing the session for transferring unstructured data for the UE;
the transmitting the indication information to a UPF, and determining, by the UPF, a QoS identifier corresponding to downlink data in the session according to the indication information, and adding, by the UPF, the QoS identifier to a packet header of downlink data in the session comprises:
transmitting the session type indication information to the UPF, and obtaining, by the UPF, a second QoS identifier corresponding to the session according to the session type indication information and a pre-configured QoS identifier corresponding to the session type for unstructured data transmission; using the second QoS identifier as the QoS identifier corresponding to the downlink data in the session; and adding, by the UPF, the second QoS identifier to the packet header of the downlink data packet in the session;
the transmitting the indication information to the UE, and determining, by the UE, a QoS identifier corresponding to uplink data in the session according to the indication information comprises:
transmitting the session type indication information to the UE, obtaining, by the UE, a second QoS identifier corresponding to the session according to the session type indication information and a pre-configured QoS identifier corresponding to a session type for unstructured data transmission, and using the second QoS identifier as a QoS identifier corresponding to the uplink data in the session.

5. The method according to claim 2, wherein
the determining indication information related to a QoS of a session for transferring unstructured data when establishing the session for transferring unstructured data for a UE comprises:
transmitting a QoS policy request message of the session to a policy control function (PCF) when establishing the session for transferring unstructured data for the UE, the QoS policy request message carrying the session type indication information for indicating that the session is used for transferring unstructured data, and the PCF is responsible for policy decision and is connected to the SMF;
obtaining a QoS policy corresponding to the session returned by the PCF according to the QoS policy request message, the QoS policy including a flow filter of a fully-matched wildcard and a third QoS identifier corresponding to the session;
the transmitting the indication information to a UPF, and determining, by the UPF, a QoS identifier corresponding to downlink data in the session according to the indication information, and adding, by the UPF, the QoS identifier to a packet header of downlink data in the session comprises:
transmitting the QoS policy to the UPF; determining, by the UPF, the QoS identifier corresponding to the downlink data in the session according to the QoS policy; and adding, by the UPF, the QoS identifier to the packet header of the downlink data packet in the session;
the transmitting the indication information to the UE, and determining, by the UE, a QoS identifier corresponding to uplink data in the session according to the indication information comprises:
transmitting the QoS policy to the UE, and determining, by the UE, a QoS identifier corresponding to the uplink data in the session according to the QoS policy.

6. The method according to any one of claims 2-5, wherein the QoS identifier comprises at least one of a QoS flow identifier or a QoS identifier.

7. A quality of service (QoS) control method applied to a user plane function (UPF), and the UPF is connected to the SMF according to claim 1, the method comprising:
receiving (801) indication information related to a QoS of a session transmitted from a session management function (SMF) when establishing the session for a UE, wherein the SMF transmits session type indicating that the session is used for transferring unstructured data, and the unstructured data is non-IP data packets;
determining (802) a QoS corresponding to downlink data in the session according to the indication information.

8. The method according to claim 7, wherein the determining a QoS corresponding to downlink data in the session according to the indication information comprises:
determining a QoS identifier corresponding to downlink data in the session according to the indication information, and adding the QoS identifier to a packet header of a downlink data packet in the session.

9. The method according to claim 8, wherein the receiving, by the SMF, indication information related to a QoS of a session for transferring unstructured data when establishing the session for transferring unstructured data for the UE comprises:
receiving a first QoS identifier from the SMF, the first QoS identifier being a QoS identifier assigned to the session when the SMF establishes the session for transferring unstructured data for the UE;
the determining a QoS identifier corresponding to downlink data in the session according to the indication information, and adding the QoS identifier to a packet header of a downlink data packet in the session comprises:
using the first QoS identifier as a QoS identifier corresponding to downlink data in the session, and adding the first QoS identifier to the packet header of the downlink data packet in the session; or
the receiving, by the SMF, indication information related to a QoS of a session for transferring unstructured data when establishing the session for transferring unstructured data for the UE comprises:
receiving session type indication information from the SMF to indicate that the session is used for transferring unstructured data;
the determining a QoS identifier corresponding to downlink data in the session according to the indication information, and adding the QoS identifier to a packet header of a downlink data packet in the session comprises:
obtaining a second QoS identifier corresponding to the session according to the session type indication information and the pre-configured QoS identifier corresponding to the session type for the unstructured data transmission; and
using the second QoS identifier as a QoS identifier corresponding to downlink data in the session, and adding the second QoS identifier to the packet header of the downlink data packet in the session; or
the receiving, by the SMF, indication information related to a QoS of a session for transferring unstructured data when establishing the session for transferring unstructured data for the UE comprises:
receiving a QoS policy from the SMF, the QoS policy including a flow filter of a fully-matched wildcard and a third QoS identifier corresponding to the session, wherein when the SMF establishes the session for transferring the unstructured data for the UE, after a QoS policy request message for the session is sent to the PCF entity, the QoS policy is corresponding to the session returned by the PCF according to the QoS policy request message, the QoS policy request message carries session type indication information indicating that the session is used for transferring unstructured data;
the determining a QoS identifier corresponding to downlink data in the session according to the indication information, and adding the QoS identifier to a packet header of a downlink data packet in the session comprises:
determining a QoS identifier corresponding to the downlink data in the session according to the QoS policy, and adding, by the UPF, the QoS identifier to the packet header of the downlink data packet in the session.

10. The method according to claim 7, wherein the determining a QoS corresponding to downlink data in the session according to the indication information comprises:
transmitting the downlink data in the session to the AN according to the indication information, and determining, by the AN, the QoS corresponding to the downlink data in the session according to the indication information sent by the SMF when establishing the session for transferring unstructured data for the UE.

11. The method according to claim 10, wherein
the receiving indication information related to a QoS of a session for transferring unstructured data from a session management function (SMF) when establishing the session for transferring unstructured data for the UE comprises:
receiving session type indication information indicating that the session is used for transferring unstructured data from the SMF;
the transmitting the downlink data in the session to the AN according to the indication information, and determing, by the AN, the QoS corresponding to the downlink data in the session according to the indication information sent by the SMF when establishing the session for transferring unstructured data for the UE comprises:
transmitting the downlink data in the session directly to the AN according to the session type indication information, and determining, by the AN, a radio bearer having the QoS corresponding to the downlink data in the session according to the session type indication information that is sent to the AN by the SMF when establishing the session for transferring unstructured data for the UE and a pre-configured radio bearer having the QoS corresponding to the session type for unstructured data transmission

12. A quality of service ,QoS, control method applied to a policy control function , PCF, the PCF is responsible for policy decision and is connected to the SMF according to claim 1, the method comprising:
receiving (1401) a QoS policy request message for a session from a session management function, SMF, when establishing the session for a UE, the QoS policy request message carrying session type indication information indicating that the session is used for transferring unstructured data, and the unstructured data is non-IP data packets;
determining (1402) a QoS policy corresponding to the session according to the QoS policy request message, wherein the QoS policy includes a flow filter of a fully matched wildcard and a third QoS identifier corresponding to the session, and
returning (1403) the QoS policy corresponding to the session to the SMF.

13. A quality of service, QoS, control device applied to a session management function, SMF, and the SMF is responsible for session management, the device comprising: a first determining module (601), configured to determine indication information related to a QoS of a session when establishing the session for a user equipment, UE, wherein the SMF transmits session type indicating that the session is used for transferring unstructured data, and the unstructured data is non-IP data packets; and a first transmitting module (602), configured to transmit the indication information to a target node for determining the QoS corresponding to the session according to the indication information, and the indication information is transmitted by the SMF.

14. A quality of service (QoS) control device applied to a user plane function (UPF), and the UPF is connected to the SMF according to claim 13, the device comprising:
a first receiving module (901), configured to receive indication information related to a QoS of a session from a session management function (SMF) when establishing the session for a UE, wherein the SMF transmits session type indicating that the session is used for transferring unstructured data, and the unstructured data is non-IP data packets; and
a second determining module (902), configured to determine a QoS corresponding to downlink data in the session according to the indication information.

15. A quality of service (QoS) control device applied to a policy control function (PCF), the PCF is responsible for policy decision and is connected to the SMF according to claim 13, the device comprising
a third receiving module (1501), configured to receive a QoS policy request message for a session from a session management function (SMF) when establishing the session for a UE, the QoS policy request message carrying session type indication information indicating the session is used for transferring unstructured data, and the unstructured data is non-IP data packets;
a fourth determining module (1502), configured to determine a QoS policy corresponding to the session according to the QoS policy request message, wherein the QoS policy includes a flow filter of a fully-matched wildcard and a third QoS identifier corresponding to the session; and a returning module (1503), configured to return the QoS policy corresponding to the session to the SMF

## Patentansprüche

1. Dienstqualitäts- (QoS) Steuerungsverfahren, das bei einer Sitzungsmanagementfunktion (SMF) angewendet wird, wobei die SMF für das Sitzungsmanagement verantwortlich ist, wobei das Verfahren umfasst:
Bestimmen (101) von Anzeigeinformationen, die sich auf eine QoS einer Sitzung beziehen, durch die SMF beim Erstellen der Sitzung für ein Benutzerendgerät (UE), wobei die SMF einen Sitzungstyp sendet, der anzeigt, dass die Sitzung zum Übertragen von unstrukturierten Daten verwendet wird und die unstrukturierten Daten Nicht-IP-Datenpakete sind; und
Senden (102) der Anzeigeinformationen durch die SMF zu einem Zielknoten und Bestimmen der QoS, die der Sitzung entspricht, gemäß den Anzeigeinformationen durch den Zielknoten.

2. Verfahren nach Anspruch 1, bei dem das Senden der Anzeigeinformationen zu einem Zielknoten und Bestimmen der QoS, die der Sitzung entspricht, gemäß der Anzeigeinformationen durch den Zielknoten umfasst:
Senden der Anzeigeinformationen zu einer Benutzerebenenfunktion (UPF) und Bestimmen eines QoS-Identifizierers, der Downlink-Daten in der Sitzung entspricht, gemäß den Anzeigeinformationen durch die UPF und Addieren des QoS-Identifizierers zu einem Paketkopf des Downlink-Datenpakets der Sitzung durch die UPF, wobei die UPF mit der SMF verbunden ist; und/oder
Senden der Anzeigeinformationen zu dem UE und Bestimmen eines QoS-Identifizierers, der Uplink-Daten in der Sitzung entspricht, gemäß den Anzeigeinformationen durch das UE.

3. Verfahren nach Anspruch 2, bei dem:
das Bestimmen der Anzeigeinformationen, die sich auf eine QoS einer Sitzung zum Übertragen von unstrukturierten Daten beziehen, beim Erstellen der Sitzung zum Übertragen von unstrukturierten Daten für ein UE umfasst:
Zuweisen eines ersten QoS-Identifizierers zu der Sitzung beim Erstellen der Sitzung zum Übertragen von unstrukturierten Daten für das UE;
das Senden des ersten QoS-Identifizierers zu der UPF unter Verwendung, durch die UPF, des ersten QoS-Identifizierers als QoS-Identifizierer, der den Downlink-Daten in der Sitzung entspricht, und Addieren des ersten QoS-Identifizierers zu dem Paketkopf des Downlink-Datenpakets durch die UPF umfasst:
Senden des ersten QoS-Identifizierers zu der UPF unter Verwendung, durch die UPF, des ersten QoS-Identifizierers als QoS-Identifizierer, der den Downlink-Daten in der Sitzung entspricht, und Addieren des ersten QoS-Identifizierers zu dem Paketkopf des Downlink-Datenpakets durch die UPF;
das Senden der Anzeigeinformationen zu dem UE und Bestimmen eines QoS-Identifizierers, der Uplink-Daten in der Sitzung entspricht, gemäß den Anzeigeinformationen durch das UE umfasst:
Senden des ersten QoS-Identifizierers zu dem UE und Verwenden des ersten QoS-Identifizierers als QoS-Identifizierer, der den Uplink-Daten in der Sitzung entspricht, durch das UE.

4. Verfahren nach Anspruch 2, bei dem
das Bestimmen der Anzeigeinformationen, die sich auf eine QoS einer Sitzung zum Übertragen von unstrukturierten Daten beziehen, bei der Erstellung der Sitzung zum Übertragen von unstrukturierten Daten für ein UE umfasst:
Erhalten von Sitzungstypinformationen, die anzeigen, dass die Sitzung zum Übertragen von unstrukturierten Daten verwendet wird, beim Erstellen der Sitzung zum Übertragen von unstrukturierten Daten für das UE;
das Senden der Anzeigeinformationen zu einer UPF und Bestimmen eines QoS-Identifizierers, der Downlink-Daten in der Sitzung entspricht, gemäß den Anzeigeinformationen durch die UPF und Addieren des QoS-Identifizierers zu einem Paketkopf von Downlink-Daten in der Sitzung durch die UPF umfasst:
Senden der Sitzungstypanzeigeinformationen zu der UPF und Erhalten, durch die UPF, eines zweiten QoS-Identifizierers, der der Sitzung entspricht, gemäß den Sitzungstypanzeigeinformationen und eines vorkonfigurierten QoS-Identifizierers, der dem Sitzungstyp für das Senden von unstrukturierten Daten entspricht; Verwenden des zweiten QoS-Identifizierers als QoS-Identifizierer, der den Downlink-Daten in der Sitzung entspricht; und Addieren des zweiten QoS-Identifizierers zu dem Paketkopf des Downlink-Datenpakets in der Sitzung durch die UPF;
das Senden der Anzeigeinformationen zu dem UE und Bestimmen eines QoS-Identifizierers, der Uplink-Daten in der Sitzung entspricht, gemäß den Anzeigeinformationen durch das UE umfasst:
Senden der Sitzungstypanzeigeinformationen zu dem UE, Erhalten, durch das UE, eines zweiten QoS-Identifizierers, der der Sitzung entspricht, gemäß den Sitzungstypanzeigeinformationen und eines vorkonfigurierten QoS-Identifizierers, der dem Sitzungstyp für das Senden von unstrukturierten Daten entspricht, und Verwenden des zweiten QoS-Identifizierers als QoS-Identifizierer, der den Uplink-Daten in der Sitzung entspricht.

5. Verfahren nach Anspruch 2, bei dem
das Bestimmen von Anzeigeinformationen, die sich auf eine QoS einer Sitzung zum Übertragen von unstrukturierten Daten beziehen, beim Erstellen der Sitzung zum Übertragen von unstrukturierten Daten für ein UE umfasst:
Senden einer QoS-Regelanforderungsmitteilung der Sitzung zu einer Regelsteuerungsfunktion (PCF) beim Erstellen der Sitzung zum Übertragen von unstrukturierten Daten für das UE, wobei die QoS-Regelanforderungsmitteilung die Sitzungstypanzeigeinformationen zum Anzeigen, dass die Sitzung zum Übertragen von unstrukturierten Daten verwendet wird, transportiert und die PCF für die Regelentscheidung verantwortlich ist und mit der SMF verbunden ist;
Erhalten einer QoS-Regel, die der Sitzung entspricht und gemäß der QoS-Regelanforderungsmitteilung von der PCF zurückgesendet wird, wobei die QoS-Regel einen Strömungsfilter einer vollständig übereinstimmenden Wildcard und einen QoS-Identifizierer, der der Sitzung entspricht, aufweist;
das Senden der Anzeigeinformationen zu einer UPF und Bestimmen eines QoS-Identifizierers, der Downlink-Daten in der Sitzung entspricht, gemäß den Anzeigeinformationen durch die UPF und Addieren des QoS-Identifizierers zu einem Paketkopf von Downlink-Daten in der Sitzung durch die UPF umfasst:
Senden der QoS-Regel zu der UPF; Bestimmen des QoS-Identifizierers, der den Downlink-Daten in der Sitzung entspricht, gemäß der QoS-Regel durch die UPF; und Addieren des QoS-Identifizierers zu dem Paketkopf der Downlink-Daten in der Sitzung durch die UPF;
das Senden der Anzeigeinformationen zu dem UE und Bestimmen eines QoS-Identifizierers, der Uplink-Daten in der Sitzung entspricht, gemäß den Anzeigeinformationen durch das UE umfasst:
Senden der QoS-Regel zu dem UE und Bestimmen eines QoS-Identifizierers, der den Uplink-Daten in der Sitzung entspricht, gemäß der QoS-Regel durch das UE.

6. Verfahren nach einem der Ansprüche 2-5, bei dem der QoS-Identifizierer einen QoS-Strömungsidentifizierer und/oder einen QoS-Identifizierer aufweist.

7. Dienstqualitäts- (QoS) Steuerungsverfahren, das auf einer Benutzerebenenfunktion (UPF) angewendet wird, wobei die UPF mit der SMF verbunden ist, nach Anspruch 1, wobei das Verfahren umfasst:
Empfangen (801) von Anzeigeinformationen, die sich auf eine QoS einer Sitzung beziehen und von einer Sitzungsmanagementfunktion (SMF) beim Erstellen der Sitzung für ein UE gesendet werden, wobei die SMF einen Sitzungstyp sendet, der anzeigt, dass die Sitzung zum Übertragen von unstrukturierten Daten verwendet wird und die unstrukturierten Daten Nicht-IP-Datenpakete sind;
Bestimmen (802) einer QoS, die Downlink-Daten in der Sitzung entspricht, gemäß den Anzeigeinformationen.

8. Verfahren nach Anspruch 7, bei dem das Bestimmen einer QoS, die Downlink-Daten in der Sitzung entspricht, gemäß den Anzeigeinformationen umfasst:
Bestimmen eines QoS-Identifizierers, der Downlink-Daten in der Sitzung entspricht, gemäß den Anzeigeinformationen und Addieren des QoS-Identifizierers zu einem Paketkopf eines Downlink-Datenpakets in der Sitzung.

9. Verfahren nach Anspruch 8, bei dem
das Empfangen, durch die SMF, von Anzeigeinformationen, die sich auf eine QoS einer Sitzung zum Übertragen von unstrukturierten Daten beziehen, beim Erstellen der Sitzung zum Übertragen von unstrukturierten Daten durch das UE, umfasst:
Empfangen eines ersten QoS-Identifizierers von der SMF, wobei der erste QoS-Identifizierer ein QoS-Identifizierer ist, der der Sitzung zugewiesen wird, wenn die SMF die Sitzung zum Übertragen von unstrukturierten Daten für das UE erstellt;
das Bestimmen eines QoS-Identifizierers, der Downlink-Daten in der Sitzung entspricht, gemäß den Anzeigeinformationen und Addieren des QoS-Identifizierers zu einem Paketkopf eines Downlink-Datenpakets in der Sitzung umfasst:
Verwenden des ersten QoS-Identifizierers als QoS-Identifizierer, der Downlink-Daten in der Sitzung entspricht, und Addieren des ersten QoS-Identifizierers zu dem Paketkopf des Downlink-Datenpakets in der Sitzung; oder
das Empfangen von Anzeigeinformationen, die sich auf eine QoS einer Sitzung zum Übertragen von unstrukturierten Daten beziehen, beim Erstellen der Sitzung für unstrukturierte Daten für das UE, umfasst:
Empfangen von Sitzungstypanzeigeinformationen von der SMF zum Anzeigen, dass die Sitzung zum Übertrage von unstrukturierten Daten verwendet wird;
das Bestimmen eines QoS-Identifizierer, der Downlink-Daten in der Sitzung entspricht, gemäß den Anzeigeinformationen und Addieren des QoS-Identifizierers zu einem Paketkopf eines Downlink-Datenpakets in der Sitzung umfasst:
Erhalten eines zweiten QoS-Identifizierers, der der Sitzung entspricht, gemäß den Sitzungstypanzeigeinformationen und des vorkonfigurierten QoS-Identifizierers, der dem Sitzungstyp für das Senden von unstrukturierten Daten entspricht; und
Verwenden des zweiten QoS-Identifizierers als QoS-Identifizierer, der Downlink-Daten in der Sitzung entspricht, und Addieren des zweiten QoS-Identifizierers zu dem Paketkopf des Downlink-Datenpakets in der Sitzung; oder
das Empfangen, durch die SMF, von Anzeigeinformationen, die sich auf eine QoS einer Sitzung zum Übertragen von unstrukturierten Daten beziehen, beim Erstellen der Sitzung zum Übertragen von unstrukturierten Daten für das UE umfasst:
Empfangen einer QoS-Regel von der SMF, wobei die QoS-Regel einen Strömungsfilter einer vollständig übereinstimmenden Wildcard und einen dritten QoS-Identifizierer, der der Sitzung entspricht, aufweist, wobei dann, wenn die SMF die Sitzung zum Übertragen der unstrukturierten Daten für das UE erstellt, nachdem eine QoS-Regelanforderungsmitteilung für die Sitzung zu der PCF-Entität gesendet worden ist, die QoS-Regel, die der Sitzung entspricht, gemäß der QoS-Regelanforderungsmitteilung von der PCF zurückgesendet wird, wobei die QoS-Regelanforderungsmitteilung Sitzungstypanzeigeinformationen transportiert, die anzeigen, dass die Sitzung zum Übertragen von unstrukturierten Daten verwendet wird;
das Bestimmen eines QoS-Identifizierers, der Downlink-Daten in der Sitzung entspricht, gemäß den Anzeigeinformationen und Addieren des QoS-Identifizierers zu einem Paketkopf eines Downlink-Datenpakets in der Sitzung umfasst:
Bestimmen eines QoS-Identifizierers, der den Downlink-Daten in der Sitzung entspricht, gemäß der QoS-Regel und Addieren des QoS-Identifizierers zu dem Paketkopf des Downlink-Datenpakets in der Sitzung durch die UPF.

10. Verfahren nach Anspruch 7, bei dem das Bestimmen eines QoS-Identifizierers, der Downlink-Daten in der Sitzung entspricht, gemäß den Anzeigeinformationen umfasst:
Senden der Downlink-Daten in der Sitzung zu dem AN gemäß den Anzeigeinformationen und Bestimmen, durch den AN, der QoS, die den Downlink-Daten in der Sitzung entspricht, gemäß den von der SMF gesendeten Anzeigeinformationen beim Erstellen der Sitzung zum Übertragen von unstrukturierten Daten für das UE.

11. Verfahren nach Anspruch 10, bei dem
das Empfangen von Anzeigeinformationen, die sich auf eine QoS einer Sitzung zum Übertragen von unstrukturierten Daten beziehen, von einer Sitzungsmanagementfunktion (SMF) beim Erstellen der Sitzung zum Übertragen von unstrukturierten Daten für das UE umfasst:
Empfangen von Sitzungstypanzeigeinformationen, die anzeigen, dass die Sitzung zum Übertragen von unstrukturierten Daten verwendet wird, von der SMF;
das Senden der Downlink-Daten in der Sitzung zu dem AN gemäß den Anzeigeinformationen und Bestimmen, durch den AN, der QoS, die den Downlink-Daten in der Sitzung entspricht, gemäß den von der SMF gesendeten Anzeigeinformationen beim Erstellen der Sitzung zum Übertragen von unstrukturierten Daten für das UE umfasst:
Senden der Downlink-Daten in der Sitzung direkt zu dem AN gemäß den Sitzungstypanzeigeinformationen und Bestimmen, durch den AN, eines Funkpeilers mit der QoS, die den Downlink-Daten in der Sitzung entspricht, gemäß den Sitzungstypanzeigeinformationen, die beim Erstellen der Sitzung zum Übertragen von unstrukturierten Daten für das UE von der SMF zu dem AN gesendet werden, und eines vorkonfigurierten Funkpeilers mit der QoS, die dem Sitzungstyp zum Senden von unstrukturierten Daten entspricht.

12. Dienstqualitäts-, QoS, Steuerungsverfahren, das bei einer Regelsteuerungsfunktion, PCF, angewendet wird, wobei die PCF für eine Regelentscheidung verantwortlich ist und mit der SMF verbunden ist, nach Anspruch 1, wobei das Verfahren umfasst:
Empfangen (1401) einer QoS-Regelanforderungsmitteilung für eine Sitzung von einer Sitzungsmanagementfunktion, SMF, beim Erstellen der Sitzung für ein UE, wobei die QoS-Regelanforderungsmitteilung Sitzungstypanzeigeinformationen transportiert, die anzeigen, dass die Sitzung zum Übertragen von unstrukturierten Daten verwendet wird und die unstrukturierten Daten Nicht-IP-Datenpakete sind;
Bestimmen (1402) einer QoS-Regel, die der Sitzung entspricht, gemäß der QoS-Regelanforderungsmitteilung, wobei die QoS-Regel einen Strömungsfilter einer vollständig übereinstimmenden Wildcard und einen dritten QoS-Identifizierer, der der Sitzung entspricht, aufweist; und
Zurückführen (1403) der QoS-Regel, die der Sitzung entspricht, zu der SMF.

13. Dienstqualitäts-, QoS, Steuerungsvorrichtung, die bei einer Sitzungsmanagementfunktion, SMF, angewendet wird, wobei die SMF für das Sitzungsmanagement verantwortlich ist, wobei die Vorrichtung aufweist: ein erstes Bestimmungsmodul (601), das derart ausgebildet ist, dass es Anzeigeinformationen, die sich auf eine QoS einer Sitzung beziehen, beim Erstellen der Sitzung für ein Benutzerendgerät, UE, bestimmt, wobei die SMF einen Sitzungstyp sendet, der anzeigt, dass die Sitzung zum Übertragen von unstrukturierten Daten verwendet wird und die unstrukturierten Daten Nicht-IP-Datenpakete sind; und ein erstes Sendemodul (602), das derart ausgebildet ist, dass es die Anzeigeinformationen zu einem Zielknoten sendet, um die QoS, die der Sitzung entspricht, gemäß den Anzeigeinformationen zu bestimmen, und die Anzeigeinformationen von der SMF gesendet werden.

14. Dienstqualitäts- (QoS) Steuerungsvorrichtung, die bei einer Benutzerebenenfunktion (UPF) angewendet wird, wobei die UPF mit der SMF verbunden ist, nach Anspruch 13, wobei die Vorrichtung aufweist:
ein erstes Empfangsmodul (901), das derart ausgebildet ist, dass es Anzeigeinformationen, die sich auf eine QoS einer Sitzung beziehen, von einer Sitzungsmanagementfunktion (SMF) beim Erstellen der Sitzung für ein UE empfängt, wobei die SMF einen Sitzungstyp sendet, der anzeigt, dass die Sitzung zum Übertragen von unstrukturierten Daten verwendet wird und die unstrukturierten Daten Nicht-IP-Datenpakete sind;
ein zweites Bestimmungsmodul (902), das derart ausgebildet ist, dass es eine QoS, die Downlink-Daten in der Sitzung entspricht, gemäß den Anzeigeinformationen bestimmt.

15. Dienstqualitäts- (QoS) Steuerungsverfahren, das bei einer Regelsteuerungsfunktion (PCF) angewendet wird, wobei die PCF für eine Regelentscheidung verantwortlich ist und mit der SMF verbunden ist, nach Anspruch 13, wobei die Vorrichtung aufweist:
ein drittes Empfangsmodul (1501), das derart ausgebildet ist, dass es eine QoS-Regelanforderungsmitteilung für eine Sitzung von einer Sitzungsmanagementfunktion (SMF) beim Erstellen der Sitzung für ein UE empfängt, wobei die QoS-Regelanforderungsmitteilung Sitzungstypanzeigeinformationen transportiert, die anzeigen, dass die Sitzung zum Übertragen von unstrukturierten Daten verwendet wird und die unstrukturierten Daten Nicht-IP-Datenpakete sind;
ein viertes Bestimmungsmodul (1502), das derart ausgebildet ist, dass es eine QoS-Regel, die der Sitzung entspricht, gemäß der QoS-Regelanforderungsmitteilung bestimmt, wobei die QoS-Regel einen Strömungsfilter einer vollständig übereinstimmenden Wildcard und einen dritten QoS-Identifizierer, der der Sitzung entspricht, aufweist; und ein Rückführmodul (1503), das derart ausgebildet ist, dass es die QoS-Regel, die der Sitzung entspricht, zu der SMF zurückführt.

## Revendications

1. Procédé de contrôle de qualité de service (QoS) appliqué à une fonction de gestion de session (SMF), et la SMF est responsable de la gestion de session, le procédé comprenant le fait de:
déterminer (101), par la SMF, les informations d'indication relatives à une QoS d'une session lors de l'établissement de la session pour un équipement d'utilisateur (UE), où la SMF transmet le type de session indiquant que la session est utilisée pour transférer les données non structurées, et les données non structurées sont des paquets de données non IP; et
transmettre (102), par la SMF, les informations d'indication à un nœud cible, et déterminer, par le nœud cible, la QoS correspondant à la session selon les informations d'indication.

2. Procédé selon la revendication 1, dans lequel le fait de transmettre les informations d'indication à un nœud cible et de déterminer, par le nœud cible, la QoS correspondant à la session selon les informations d'indication comprend le fait de:
transmettre les informations d'indication à une fonction de plan d'utilisateur (UPF), et déterminer, par l'UPF, un identificateur de QoS correspondant aux données de liaison descendante dans la session selon les informations d'indication, et ajouter, par l'UPF, l'identificateur de QoS à un en-tête de paquet du paquet de données de liaison descendante de la session et l'UPF est connectée à la SMF; et/ou
transmettre les informations d'indication à l'UE, et déterminer, par l'UE, un identificateur de QoS correspondant aux données de liaison montante dans la session selon les informations d'indication.

3. Procédé selon la revendication 2, dans lequel
la détermination des informations d'indication relatives à une QoS d'une session pour transférer les données non structurées lors de l'établissement de la session pour transférer les données non structurées pour un UE comprend le fait de:
attribuer un premier identificateur de QoS à la session lors de l'établissement de la session pour transférer les données non structurées pour l'UE;
le fait de transmettre le premier identificateur de QoS à l'UPF en utilisant, par l'UPF, le premier identificateur de QoS comme identificateur de QoS correspondant aux données de liaison descendante dans la session, et d'ajouter, par l'UPF, le premier identificateur de QoS à l'en-tête de paquet du paquet de données de liaison descendante comprend le fait de:
transmettre le premier identificateur de QoS à l'UPF en utilisant, par l'UPF, le premier identificateur de QoS comme identificateur de QoS correspondant aux données de liaison descendante dans la session, et ajouter, par l'UPF, le premier identificateur de QoS à l'en-tête de paquet du paquet de données de liaison descendante;
le fait de transmettre les informations d'indication à l'UE et de déterminer, par l'UE, un identificateur de QoS correspondant aux données de liaison montante dans la session selon les informations d'indication comprend le fait de:
transmettre le premier identificateur de QoS à l'UE, et utiliser, par l'UE, le premier identificateur de QoS comme identificateur de QoS correspondant aux données de liaison montante dans la session.

4. Procédé selon la revendication 2, dans lequel
la détermination des informations d'indication relatives à une QoS d'une session pour transférer les données non structurées lors de l'établissement de la session pour transférer les données non structurées pour un UE comprend le fait de:
obtenir les informations d'indication de type de session indiquant que la session est utilisée pour transférer les données non structurées lors de l'établissement de la session pour transférer les données non structurées pour l'UE;
le fait de transmettre les informations d'indication à un UPF et de déterminer, par l'UPF, un identificateur de QoS correspondant aux données de liaison descendante dans la session selon les informations d'indication, et d'ajouter, par l'UPF, l'identificateur de QoS à un en-tête de paquet de données de liaison descendante dans la session comprend le fait de:
transmettre les informations d'indication de type de session à l'UPF, et obtenir, par l'UPF, un deuxième identificateur de QoS correspondant à la session selon les informations d'indication de type de session et un identificateur de QoS préconfiguré correspondant au type de session pour la transmission de données non structurées; utiliser le deuxième identificateur de QoS comme identificateur de QoS correspondant aux données de liaison descendante dans la session; et ajouter, par l'UPF, le deuxième identificateur de QoS à l'en-tête de paquet du paquet de données de liaison descendante dans la session;
le fait de transmettre les informations d'indication à l'UE et de déterminer, par l'UE, un identificateur de QoS correspondant aux données de liaison montante dans la session selon les informations d'indication comprend le fait de:
transmettre les informations d'indication de type de session à l'UE, obtenir, par l'UE, un deuxième identificateur de QoS correspondant à la session selon les informations d'indication de type de session et un identificateur de QoS préconfiguré correspondant à un type de session pour la transmission de données non structurées, et utiliser le deuxième identificateur de QoS comme identificateur de QoS correspondant aux données de liaison montante dans la session.

5. Procédé selon la revendication 2, dans lequel
la détermination des informations d'indication relatives à une QoS d'une session pour transférer les données non structurées lors de l'établissement de la session pour transférer les données non structurées pour un UE comprend le fait de:
transmettre un message de demande de politique de QoS de la session à une fonction de contrôle de politique (PCF) lors de l'établissement de la session pour le transfert de données non structurées pour l'UE, le message de demande de politique de QoS portant les informations d'indication de type de session pour indiquer que la session est utilisée pour transférer les données non structurées, et la PCF est responsable de la décision de politique et est connectée au SMF;
obtenir une politique de QoS correspondant à la session retournée par la PCF selon le message de demande de politique de QoS, la politique de QoS comportant un filtre de flux de remplacement entièrement adapté et un troisième identificateur de QoS correspondant à la session;
le fait de transmettre les informations d'indication à un UPF, et de déterminer, par l'UPF, un identificateur de QoS correspondant aux données de liaison descendante dans la session selon les informations d'indication, et d'ajouter, par l'UPF, l'identificateur de QoS à un en-tête de paquet de données de liaison descendante dans la session comprend le fait de:
transmettre la politique de QoS à l'UPF; déterminer, par l'UPF, l'identificateur de QoS correspondant aux données de liaison descendante dans la session selon la politique de QoS; et ajouter, par l'UPF, l'identificateur de QoS à l'en-tête de paquet du paquet de données de liaison descendante dans la session;
le fait de transmettre les informations d'indication à l'UE et de déterminer, par l'UE, un identificateur de QoS correspondant aux données de liaison montante dans la session selon les informations d'indication comprend le fait de:
transmettre la politique de QoS à l'UE et déterminer, par l'UE, un identificateur de QoS correspondant aux données de liaison montante dans la session selon la politique de QoS.

6. Procédé selon l'une quelconque des revendications 2 à 5, dans lequel l'identificateur de QoS comprend au moins l'un parmi un identificateur de flux de QoS ou un identificateur de QoS.

7. Procédé de contrôle de qualité de service (QoS) appliqué à une fonction de plan d'utilisateur (UPF), et l'UPF est connectée à la SMF selon la revendication 1, le procédé comprenant le fait de:
recevoir (801) les informations d'indication relatives à une QoS d'une session transmises à partir d'une fonction de gestion de session (SMF) lors de l'établissement de la session pour un UE, où la SMF transmet le type de session indiquant que la session est utilisée pour transférer les données non structurées, et les données non structurées sont des paquets de données non IP;
déterminer (802) une QoS correspondant aux données de liaison descendante dans la session selon les informations d'indication.

8. Procédé selon la revendication 7, dans lequel la détermination d'une QoS correspondant aux données de liaison descendante dans la session selon les informations d'indication comprend le fait de:
déterminer un identificateur de QoS correspondant aux données de liaison descendante dans la session selon les informations d'indication, et ajouter l'identificateur de QoS à un en-tête de paquet d'un paquet de données de liaison descendante dans la session.

9. Procédé selon la revendication 8, dans lequel
la réception, par la SMF, des informations d'indication relatives à une QoS d'une session pour transférer les données non structurées lors de l'établissement de la session pour transférer les données non structurées pour l'UE comprend le fait de:
recevoir un premier identificateur de QoS de la SMF, le premier identificateur de QoS étant un identificateur de QoS attribué à la session lorsque la SMF établit la session pour transférer les données non structurées pour l'UE;
le fait de déterminer un identificateur de QoS correspondant aux données de liaison descendante dans la session selon les informations d'indication, et d'ajouter l'identificateur de QoS à un en-tête de paquet d'un paquet de données de liaison descendante dans la session comprend le fait de:
utiliser le premier identificateur de QoS comme identificateur de QoS correspondant aux données de liaison descendante dans la session, et ajouter le premier identificateur de QoS à l'en-tête de paquet du paquet de données de liaison descendante dans la session; ou
la réception, par la SMF, des informations d'indication relatives à une QoS d'une session pour transférer les données non structurées lors de l'établissement de la session pour transférer les données non structurées pour l'UE comprend le fait de:
recevoir les informations d'indication de type de session de la SMF pour indiquer que la session est utilisée pour transférer les données non structurées;
le fait de déterminer un identificateur de QoS correspondant aux données de liaison descendante dans la session selon les informations d'indication et d'ajouter l'identificateur de QoS à un en-tête de paquet d'un paquet de données de liaison descendante dans la session comprend le fait de:
obtenir un deuxième identificateur de QoS correspondant à la session selon les informations d'indication de type de session et l'identificateur de QoS préconfiguré correspondant au type de session pour la transmission des données non structurées; et
utiliser le deuxième identificateur de QoS comme identificateur de QoS correspondant aux données de liaison descendante dans la session, et ajouter le deuxième identificateur de QoS à l'en-tête de paquet du paquet de données de liaison descendante dans la session; ou
la réception, par la SMF, des informations d'indication relatives à une QoS d'une session pour transférer les données non structurées lors de l'établissement de la session pour transférer les données non structurées pour l'UE comprend le fait de:
recevoir une politique de QoS de la SMF, la politique de QoS comportant un filtre de flux de remplacement entièrement adapté et un troisième identificateur de QoS correspondant à la session, où, lorsque la SMF établit la session pour transférer les données non structurées pour l'UE après qu'un message de demande de politique de QoS pour la session est envoyé à l'entité de PCF, la politique de QoS correspond à la session retournée par la PCF selon le message de demande de politique de QoS, le message de demande de politique de QoS porte les informations d'indication de type de session indiquant que la session est utilisée pour transférer les données non structurées;
le fait de déterminer un identificateur de QoS correspondant aux données de liaison descendante dans la session selon les informations d'indication et d'ajouter l'identificateur de QoS à un en-tête de paquet d'un paquet de données de liaison descendante dans la session comprend le fait de:
déterminer un identificateur de QoS correspondant aux données de liaison descendante dans la session selon la politique de QoS, et ajouter, par l'UPF, l'identificateur de QoS à l'en-tête de paquet du paquet de données de liaison descendante dans la session.

10. Procédé selon la revendication 7, dans lequel la détermination d'une QoS correspondant aux données de liaison descendante dans la session selon les informations d'indication comprend le fait de:
transmettre les données de liaison descendante dans la session à l'AN selon les informations d'indication, et déterminer, par l'AN, la QoS correspondant aux données de liaison descendante dans la session selon les informations d'indication envoyées par la SMF lors de l'établissement de la session pour le transfert des données non structurées pour l'UE.

11. Procédé selon la revendication 10, dans lequel
la réception des informations d'indication relatives à une QoS d'une session pour transférer les données non structurées d'une fonction de gestion de session (SMF) lors de l'établissement de la session pour transférer les données non structurées pour l'UE comprend le fait de:
recevoir les informations d'indication de type de session indiquant que la session est utilisée pour transférer les données non structurées de la SMF;
le fait de transmettre les données de liaison descendante dans la session à l'AN selon les informations d'indication et de déterminer, par l'AN, la QoS correspondant aux données de liaison descendante dans la session selon les informations d'indication envoyées par la SMF lors de l'établissement de la session pour le transfert des données non structurées pour l'UE comprend le fait de:
transmettre les données de liaison descendante dans la session directement à l'AN selon les informations d'indication de type de session et déterminer, par l'AN, un support radio présentant la QoS correspondant aux données de liaison descendante dans la session selon les informations d'indication de type de session qui sont envoyées à l'AN par la SMF lors de l'établissement de la session pour le transfert des données non structurées pour l'UE et un support radio préconfiguré présentant la QoS correspondant au type de session pour l'émetteur de données non structurées.

12. Procédé de contrôle de qualité de service, QoS, appliqué à une fonction de contrôle de politique, PCF, la PCF est responsable de la décision de politique et est connectée à la SMF selon la revendication 1, le procédé comprenant le fait de:
recevoir (1401) un message de demande de politique de QoS pour une session d'une fonction de gestion de session, SMF, lors de l'établissement de la session pour un UE, le message de demande de politique de QoS portant les informations d'indication de type de session indiquant que la session est utilisée pour transférer les données non structurées, et les données non structurées sont des paquets de données non IP;
déterminer (1402) une politique de QoS correspondant à la session selon le message de demande de politique de QoS, où la politique de QoS comporte un filtre de flux de remplacement entièrement adapté et un troisième identificateur de QoS correspondant à la session, et
retourner (1403) la politique de QoS correspondant à la session à la SMF.

13. Dispositif de contrôle de qualité de service, QoS, appliqué à une fonction de gestion de session, SMF, et la SMF est responsable de la gestion de session, le dispositif comprenant: un premier module de détermination (601) configuré pour déterminer les informations d'indication relatives à une QoS d'une session lors de l'établissement de la session pour un équipement d'utilisateur, UE, où la SMF transmet un type de session indiquant que la session est utilisée pour transférer les données non structurées, et les données non structurées sont des paquets de données non IP; et un premier module de transmission (602) configuré pour transmettre les informations d'indication à un nœud cible pour déterminer la QoS correspondant à la session selon les informations d'indication, et les informations d'indication sont transmises par la SMF.

14. Dispositif de contrôle de qualité de service (QoS) appliqué à une fonction de plan d'utilisateur (UPF), et l'UPF est connectée à la SMF selon la revendication 13,
le dispositif comprenant:
un premier module de réception (901), configuré pour recevoir les informations d'indication relatives à une QoS d'une session d'une fonction de gestion de session (SMF) lors de l'établissement de la session pour un UE, où la SMF transmet le type de session indiquant que la session est utilisée pour le transfert des données non structurées, et les données non structurées sont des paquets de données non IP; et
un deuxième module de détermination (902) configuré pour déterminer une QoS correspondant aux données de liaison descendante dans la session selon les informations d'indication.

15. Dispositif de contrôle de qualité de service (QoS) appliqué à une fonction de contrôle de politique (PCF), la PCF est responsable de la décision de politique et est connectée à la SMF selon la revendication 13, le dispositif comprenant
un troisième module de réception (1501) configuré pour recevoir un message de demande de politique de QoS pour une session d'une fonction de gestion de session (SMF) lors de l'établissement de la session pour un UE, le message de demande de politique de QoS portant les informations d'indication de type de session indiquant que la session est utilisée pour transférer les données non structurées, et les données non structurées sont des paquets de données non IP;
un quatrième module de détermination (1502) configuré pour déterminer une politique de QoS correspondant à la session selon le message de demande de politique de QoS, où la politique de QoS comprend un filtre de flux de remplacement entièrement adapté et un troisième identificateur de QoS correspondant à la session; et un module de retour (1503) configuré pour retourner la politique de QoS correspondant à la session à la SMF.
